# EUROPEAN PATENT SPECIFICATION

(11) **EP 4 652 427 B1**
(45) Date of publication and mention of the grant of the patent: **18.11.2026**
(21) Application number: 24700841.0
(22) Date of filing: 12.01.2024
(51) Int. Cl.: G01B 9/02003, G01B 9/02018, G01B 9/02004, G01B 9/02001

(54) **METHOD FOR DETERMINING A POSITION OF A TARGET BY OPTICAL INTERFEROMETRY AND DEVICE FOR DOING THE SAME**
VERFAHREN ZUR BESTIMMUNG EINER POSITION EINES ZIELS MITTELS OPTISCHER INTERFEROMETRIE UND VORRICHTUNG DAFÜR
PROCÉDÉ DE DÉTERMINATION DE POSITION DE CIBLE PAR INTERFÉROMÉTRIE OPTIQUE ET DISPOSITIF POUR SA MISE EN OEUVRE

(30) Priority: 19.01.2023 NL 2033988
(43) Date of publication of application: 26.11.2025
(73) Proprietor: Prodrive Technologies Innovation Services B.V., 5692 EM Son en Breugel (NL)
(72) Inventor: ZWETSLOOT, Sybren, 5692 EM Son en Breugel (NL)
(74) Representative: Arnold & Siedsma
(86) International application number: PCT/NL2024/050014
(87) International publication number: WO 2024/155183

(56) References cited:
- CN-A- 112 432 602
- US-A1- 2010 259 760
- US-A1- 2021 199 418

## Description

### Technical field

The present invention relates to a method for high stability and high precision interferometry for determining a position of a target by optical interferometry and a device for doing the same.

### Background art

Interferometers may be used for measuring a difference in an optical path length towards a movable target with respect to an optical path length towards a reference by generating an interference signal from an interaction between light that has travelled the reference optical path and light that has travelled a target optical path. A generic concern with interferometry and interferometers are changes in optical path length caused by environmental factors such as temperature changes, because this may affect the length of the beam's path and the refractive indices of the medium through which the beam passes which both influence and determine the optical path length. Other generic concerns are providing adequate spatial resolution, preferably uniform spatial resolution, determining a phase and a direction of travel.

US 8,570,529 B2 describes a position detection device comprising an interferometer to produce an interference pattern dependent on the length of the measurement section and a detector, which takes the detected interference pattern as a basis for producing a measurement signal. The position detection device further comprises a source, for producing a wave field in the measurement section, a wave field variation device for varying the wavelength of the wave field over time, and an evaluation circuit for evaluating the measurement signal on the basis of the variation over time. A disadvantage of this solution is that it may require a relatively large dynamic range on the modulation input which introduces noise in the measurements. A further disadvantage of this solution is that it is complex to implement in a system wherein the position is detected along multiple axes, particularly when a same modulation depth is desired along multiple axes. Furthermore, it does not allow to determine an accurate position in situations where the reference distance and the target distance may be equal, which may typically occur in free-space solutions.

CN 112432602 A, US 2021/0199418 A1 and CN 112857206A each describe interferometers comprising complex and costly optics for modulating a phase of a reference signal to measure a target distance with a stable modulation depth.

### Summary of the invention

It is an object of the invention to solve at least one, preferably all of the disadvantages related to the prior art.

According to a first aspect of the invention the object is achieved by providing a method for determining a position by differential optical interferometry of a target reflector in a measurement range (e.g. along an axis) according to the appended claims. The method comprising the steps of generating a first, a second and a third coherent light beam at a first single wavelength at a first instance of time (e.g. a first instant) and at a second single wavelength different from the first wavelength at a second instance of time (e.g. a second instant). A first reference signal may be generated by guiding the first coherent light beam along a first optical path having a first optical path length. A measure signal may be generated by guiding the second coherent light beam along a second optical path having a second optical path length, wherein the second optical path comprises a (movable) target. A second reference signal may be generated by guiding the third coherent light beam along a third optical path having a third optical path length, wherein the third optical path length is different from the first optical path length and the second optical path length. A common delay may be provided between generating the second reference signal and generating the first reference signal and between generating the second reference signal and generating the measure signal. A first interference signal may be generated from the first reference signal and a first portion of the second reference signal at the first instance of time and at the second instance of time. A second interference signal may be generated from the measure signal and a second portion of the second reference signal at the first instance of time and the second instance of time. A first amplitude of the first interference signal may be determined. A second amplitude of the second interference may be determined. A first signal may be generated based on the first interference signal and the first amplitude. A second signal may be generated based on the second interference signal and the second amplitude. A position of the target may be determined by calculating a difference between the first optical path length and the second optical path length based on the first and the second signal both in the first and the second instance of time.

The method achieves the object of the invention by generating two interference patterns, a first one between the first reference signal and the second reference signal and a second one between the measure signal and the second reference signal, wherein the second reference signal is generated by guiding the third coherent light beam along the third optical path having the third optical path length, wherein the third optical path length is different from the first optical path length and the second optical path length. This reduces a relative variation in (phase) modulation depth, even for a constant frequency modulation of the light generating means, and therefore avoids adjusting the modulation depth depending on the target position. This enables and/or simplifies reducing the noise in measurements. Furthermore, it is advantageous to minimize the variation in modulation depth especially in case measurements are performed along multiple axes, since this improves the contrast of the interference between the different signals.

By modulating the wavelength between two states, for instance by modulating between a first (single) wavelength generated at a first instance of time and a second (single) wavelength generated at a second instance of time, the sign information of the phase difference may be resolved. It may also improve the resolution of the pathlength difference, by levelling the resolution throughout the range of pathlength differences over a measurement range of the target along the axis. Preferably, the wavelength is modulated between the two states according to a sine wave. This may simplify the generation and/or processing of signals. However, any other transition of the laser wavelength will also be possible. Modulation of the wavelength between two states (e.g. the first and second state) can be achieved by frequency modulation of a light generating means comprising a light source, for instance a (single frequency) laser. Such frequency modulation to generate a first single wavelength at a first instance of time and a second single wavelength at a second instance of time may be performed at a modulation frequency, being the frequency of modulating between the first state, for instance corresponding to the first single wavelength, and the second state, for instance corresponding to the second single wavelength. A modulator may be provided to modulate the light source. Such modulator may for instance be configured to adapt a parameter of the light source such as such as a (driving) current, a (driving) voltage or a temperature.

Preferably, a low cost light source is used. A suitable light source is configured for emitting light having a single wavelength at a time and is capable of changing the single wavelength between two or more states. Preferably, the light source generates light having a single wavelength at a time and is capable of changing the single wavelength between two or more states, wherein each state corresponds to a single wavelength having a different wavelength. The light source may be configured for changing between the two or more states by means of adapting a parameter of the light source, such as a current, a voltage or a temperature, for instance using a modulator. Beneficially, the light source is configured for having a linear correlation between an adaptation of the parameter and a change of the single wavelength. The light source may for instance comprise a tuneable homodyne laser source, such as a semiconductor or diode laser, which typically offer a low cost light source. Examples of an advantageous light source are a distributed feedback (DFB) laser and a Distributed Bragg Reflector (DBR) laser. For specific embodiments with a limited target distance a vertical-cavity surface-emitting laser (VCSEL) may for example be used as an advantageous light source.

The first interference signal may be generated by interference between the first reference signal and the first portion of the second reference signal. The second interference signal may be generated by interference between the measure signal and a second portion of the second reference signal. Both reference signals are generated at the first instance and at the second instance of time and detected using detecting means. Such detecting means may for instance comprise a first detector for detecting the first interference signal and a second detector for detecting the second interference signal. The first and second detector may for instance each comprise a photodiode for detecting the corresponding interference signal.

For determining the position of the target, a first and a second set of quadrature signals may be determined by demodulating the first and second interference signal, respectively, according to a demodulation scheme. Several modulation schemes will be suitable, as will be apparent to a person skilled in the art. For instance, the first and second interference signal may be demodulated at a first frequency corresponding to the modulation frequency and at a second frequency corresponding to twice the modulation frequency. Another example is to filter the first and second interference signal using a low pass filter and to demodulate the first and second interference signal at the modulation frequency.

The measurement range preferably comprises all potential positions of the target reflector over the target reflector overall excursion along an axis. The position of the target reflector may be determined within the measurement range, for instance to monitor the position of a stage attached to the target reflector.

The target reflector may comprise any type of suitable reflector, such as a cube corner, a retroreflector or a plane mirror. Preferably, the target reflector comprises a plane mirror to enlarge the tolerances on translation of the target reflector in a direction orthogonal to the incident light. For metrology of stage position this advantage is critical because a translation in a direction orthogonal to the measurement direction does not affect the interference signals. Therefore, determining the position of the target reflector along the measurement range is not affected. The main benefit is that this allows monitoring the position of the target or the stage along orthogonal measurement ranges, because it provides decoupled position measurements along orthogonal axes.

The reference reflector may comprise any type of suitable reflector, such as a retroreflector (e.g. cube corner) or a plane mirror. Preferably, the target reflector comprises a plane mirror because a plane mirror can translate with respect to the interferometer in a direction orthogonal to the measurement direction without affecting the measurement, creating the possibility for a decoupled displacement measurements along orthogonally arranged axes.

Preferably, a common delay is provided between generating the second reference signal and generating the first reference signal and between generating the second reference signal and generating the measure signal. This ensures that the first and second interference signal are each generated from respective signals being unbalanced (i.e. unbalanced measure signal and second reference signal, and unbalanced first reference signal and second reference signal), wherein a first ratio, between the first optical path length and the third optical path length and, and a second ratio, between the second optical path length and the third optical path length, are each greater than 1 or smaller than 1. Such common delay reduces a relative variation in (phase) modulation depth, even for a constant frequency modulation of the source, and therefore avoids adjusting the modulation depth depending on the target position. This enables and/or simplifies reducing the noise in measurements, because by reducing the relative variation in the measured distances, the required variation in modulation input may be reduced. Furthermore, it is advantageous to minimize the variation in modulation depth especially in situations where measurements are performed for multiple (orthogonal) axes, since this may improve the contrast of the interference between the respective signals and therefore may improve the signal strength of the demodulated signals for a measurement range of the target (e.g. a range of target distances) for such axes.

Advantageously, the common delay may be configured to correspond to an optical path length difference configured such that an amplitude of each of the demodulated first and second interference signal does not exhibit a zero crossing due to a change of a phase modulation depth of any of the first and second interference signals over a measurement range of the target of the interferometer for a (constant) frequency modulation amplitude of the light source. This may be achieved when the delay corresponds to an optical path length being longer than the measurement range of the target, for instance at least twice as long as the measurement range of the target. For instance, the common delay is chosen such that a third ratio between the measurement range of the target and an absolute value of a difference between the second optical path length and the third optical path length is greater than 2, preferably greater than 2.1, preferably greater than 2.2. This can typically be achieved when both the first and second ratio are one of substantially greater than 10 and substantially smaller than 0,1. In the event that the common delay forms part of both the first and second optical path, the optical path length of the common delay may substantially be an order of magnitude longer than the third optical path length.

Preferably, the optical length of the common delay is chosen such that an amplitude of each quadrature signal of the first and the second set of quadrature signals does not exhibit a zero crossing over the measurement range of the target reflector. Preferably, the optical length of the common delay is chosen such that an amplitude of each quadrature signal of the first and the second set of quadrature signals are sufficiently great over the measurement range of the target such that a signal to noise ratio can be achieved that does not limit the sensor performance. For instance, the optical path length of the delay is chosen such that an amplitude of each quadrature signal of the first and the second set of quadrature signals does not vary by more than a factor four. Preferably, the optical path length of the delay is chosen such that an amplitude of each quadrature signal of the first and the second set of quadrature signals does not vary by more than a factor two.

Preferably, the common delay is provided by a common delay path. The benefit of providing a common delay path is that environmental influences such as thermal expansion equally affect a first delay provided between generating the second reference signal and generating the first reference signal and a second delay provided between generating the second reference signal and generating the measure signal. Therefore, determining the position of the target is essentially unaffected by these environmental influences. Advantageously, one of the third optical path and both the first and the second optical path (i.e. the third optical path or both the first and the second optical path) comprises a delay path providing the common delay. Such delay path may comprise a light guide for offering a simple and compact means for providing a delay to a signal. Optionally, the third optical path comprises such a delay path. Preferably, both the first and the second optical path (i.e. the third optical path or both the first and the second optical path) comprises a delay path, because both these paths are typically longer than the third optical path to start with. Therefore, a length of such delay path can typically be smaller than in an alternative embodiment wherein the third optical path comprises the delay path.

Along coinciding or overlapping parts of the first and second optical paths, the first coherent light beam may comprise light of a first polarization direction and the second coherent light beam may comprise light of a second polarization direction different from the first polarization direction. Typically, the first polarization direction is orthogonal to the second polarization direction. Along the respective optical paths, the polarization directions of the corresponding beam may be altered.

Preferably, the coherent light beam corresponding to the first and the second optical path is collimated along at least a part of the coinciding optical path. This is particularly beneficial for parts of the respective optical paths relating to free-space interferometry. Preferably, the first and second coherent light beam are generated from a single coherent light source, because changes in the light source (e.g. modulation of frequencies between states) influence both coherent light beams simultaneously without requiring any additional means for instance for synchronization. Generating the first coherent light beam and the second coherent light beam may comprise splitting light generated by a light source. For the same reason, it is preferred that in addition the third coherent light beam is generated from the single coherent light source. Generating the third coherent light beam may comprise splitting light generated by the light source.

Preferably, splitting light for generating the first coherent light beam and the second coherent light beam comprises splitting light generated by the light source according to a first and a second polarization state, respectively. The first portion and the second portion of the second reference signal may be generated by splitting the third coherent light beam according to a third and a fourth polarization state, respectively. Preferably, the first and the second polarization state correspond to the third and the fourth polarization state respectively.

Generating the first reference signal and the measure signal may comprise guiding the first and the second coherent light beam (in part) along a coinciding optical path. Preferably, an optical assembly resembling optical assemblies used in Michelson interferometer is used for generating the first reference signal and the measure signal. Beneficially, the common delay is provided outside the optical assembly to reduce the interferometer's size and number of components.

In a preferred embodiment, both the first and the second optical path pass a polarizing beam splitter, wherein the polarizing beam splitter is configured for splitting the first and the second optical path. Following a non-coinciding part of the first and second optical path, the beam splitter may be used for re-joining the first and second optical path.

In a preferred embodiment, the method further comprises a calibration step to determine the position of the target more accurately. The calibration step for instance comprises determining a first amplitude of the first interference signal and a second amplitude of the second interference signal. A first signal (e.g. electrical signal) may be generated based on the first interference signal and the first amplitude. A second signal (e.g. electrical signal) may be generated based on the second interference signal and the second amplitude. For instance, the determined first and second amplitude may be used to adapt a sensitivity of the detecting means being used to generate a first and a second signal for the first and second interference signal, respectively. For instance, the first amplitude may be used to adapt a sensitivity of a first detector of the detecting means and the second amplitude may be used to adapt a sensitivity of a second detector of the detecting means. Preferably, each sensitivity is adapted such that the measurement range(s) of the detecting means are optimally (e.g. fully) used. For instance, the detecting means comprises at least one analogue to digital converter (ADC) and the calibration step is used to adapt a sensitivity of an ADC such that a range of corresponding interference signal corresponds to measurement range of the ADC.

The first and second amplitude may be determined by peak detection or by regular sampling of the interference signal. Preferably, the first and second amplitude is determined based on a set of zero crossings for the first and the second interference signal, respectively, wherein the set of zero crossing preferably comprises at least three consecutive zero crossings. The benefit of zero crossing detection is that the accuracy of determining the amplitude is often higher than for sampling data for peak detection. For instance, the first and second amplitude may be determined based on a minimum value of the respective interference pattern (e.g. reached halfway between a first and second zero crossing of the set of zero crossings) and a maximum value of the respective interference pattern (e.g. reached halfway between the second and third zero crossing of the set of zero crossings). For faster moving targets, it may be beneficial to determine the first and second amplitude based on fitting a (periodic) function, for instance a trigonometric function such as a cosine function, to the respective interference signal. For instance, the first and second amplitude may be determined based on fitting a first and a second function on the first and second interference signal, respectively.

However, in some situations (e.g. when the target reflector does not move) such zero crossing may not occur automatically. For example, zero crossings may not occur when the optical path length of the second optical path is substantially constant (e.g. changes by less than 1/16^{th} or 1/8^{th} of the wavelength), for instance zero crossings may not occur when the target reflector is stationary along the measurement range. Without zero crossings it is impossible to discriminate between disturbances that influence the interference pattern and changes of the optical path length of the second optical path (e.g caused by movement of the target reflector along the measurement range). Such disturbances may comprise factors affecting the guidance of one of the light beams in the respective optical path to some extent, for instance caused by one of particulate matter, condensation or fouling of optical components, changes in alignment of optical components. Additionally or alternatively, such disturbances may comprise factors affecting signal detection and processing, for instance caused by thermal drift of electronics such as the electronics of the detecting means. In any of such situations, zero crossings in an interference signal may be forced by adapting (e.g. modulating) an optical path length of one of the optical paths corresponding to the interference signal. For instance, an optical path length of the first optical path may be changed by moving the target reflector. Preferably, the optical path length is modulated such that it oscillates with an amplitude of at least half of one of the first wavelength, the second wavelength and a nominal value of the first and second wavelength, preferably an amplitude of at least half of the larger one of the first and second wavelength. Beneficially, the common delay is adapted (e.g. modulated) such that the optical path length difference varies by at least an optical path length corresponding to one of the first wavelength, the second wavelength and a nominal value of the first and second wavelength, preferably to the larger one of the first and second wavelength. In a preferred embodiment, the optical path length difference introduced by the common delay is adapted. The advantage of adapting an optical path length of the delay is that both interference patterns are affected to the same extent. Therefore, the adaptation of the optical path length is automatically cancelled out when determining the position of the target reflector. Preferably, the optical path length difference introduced by the delay is modulated with an amplitude of at least half of one of the first wavelength, the second wavelength and a nominal value of the first and second wavelength, preferably an amplitude of at least half of the larger one of the first and second wavelength.

The common delay may be adapted by adapting the optical path length of one of the third optical path and the coinciding optical path, irrespective of which one of the two comprises the common delay path. Preferably, the common delay is adapted by adapting the optical path length of the common delay path, because an appropriate change of optical path length is more easily achieved in the path(s) having a longest optical path length.

The optical path length of (part of) a path (e.g. the delay path) may be adapted or modulated by changing at least one of a refractive index in (the part of) the path and a length of (part of) the path. In a beneficial embodiment the optical path length of the delay path is configured to oscillate with an amplitude of at least half of one of the first wavelength, the second wavelength and a nominal value of the first and second wavelength, preferably an amplitude of at least half of the larger one of the first and second wavelength. For instance, exposing one of the paths (e.g. delay path) to a magnetic field (e.g. generated by an electromagnetic coil) when such path for instance comprises a pockels cell, exposing one of the paths to heat (e.g. generated by a heating element) or exposing one of the paths to a shearing force (e.g. generated by an actuator) may change the optical path length. In a preferred embodiment heat is applied to the delay. For instance, at least part of the delay path (e.g. light guide) is exposed to a heating element configured to (alternatingly) heat the light guide. In a beneficial embodiment, at least part of the light guide is wound around the heating element.

The optical path length may be oscillated at an oscillation frequency, which is preferably at least 1Hz and more preferably at least 10Hz. A temperature setpoint for heating the light guide may be chosen such that cooling speeds correspond to the chosen oscillation frequency. For instance, by increasing the difference between a nominal temperature of the light guide and an environmental temperature of the light guide, the oscillation frequency may be increased. The environment of the light guide may also be actively cooled to lower the environmental temperature of the light guide and thereby increase an upper limit of the oscillation frequency.

According to a second aspect of the invention the object is achieved by a device according to the appended claims. The device reaches the object of the invention in a similar way as the method according to the present invention, wherein related features equally apply mutatis mutandis to the device, or vice versa to the method according to the first aspect.

A device for determining by optical interferometry a position of a target in a measurement range comprises a light generating means, an optical means, a detecting means and a processing means.

The light generating means comprises a light source that may be configured for being modulated between a first state and a second state. The light generating means may be configured for generating light at a first single wavelength in the first state. The light generating means may be configured for generating light at a second single wavelength different from the first wavelength in the second state.

The optical means may be provided downstream of the light generating means. The optical means may be configured for generating a first coherent reference signal, a coherent measure signal and a second coherent reference signal. The optical means preferably comprises a first, a second and a third optical path. The first optical path has a first optical path length and may be configured for generating the first coherent reference signal by guiding light generated by the light source (217). The second optical path has a second optical path length and may comprise a movable target and be configured for generating the coherent measure signal by guiding light generated by the light source. The third optical path has a third optical path length different from the first optical path length and the second optical path length. The third optical path may be configured for generating the second coherent reference signal by guiding light generated by the light source. The optical means may further comprise a delay path providing a common delay between generating the second coherent reference signal and generating the first coherent reference signal and between generating the second coherent reference signal and generating the coherent measure signal.

The detecting means may be provided downstream of the optical means. The detecting means may be configured for generating a first interference signal between the first coherent reference signal and a first portion of the second coherent reference signal. The detecting means may be configured for generating a second interference signal between the coherent measure signal and a second portion of the second coherent reference signal. The detecting means may comprise a first detector configured for detecting the first interference signal and determining a first amplitude of the first interference. The detecting means may be configured for generating a first signal based on the first interference signal and the first amplitude. The detecting means may comprise a second detector, configured for detecting the second interference signal and a second amplitude of the second interference. The detecting means may be configured for generating a second signal based on the second interference signal and the second amplitude. The first and second detector may for instance each comprise a photodiode for detecting the corresponding interference signal.

The processing means may be configured for determining a position of the target by calculating a difference between the first optical path length and the second optical path length based on the first and second signal in both the first and the second state. The processing means may for instance comprise a processing unit for determining the position of the target.

In a preferred embodiment, the device further comprises a light guide to reduce the size and the need for folded optics. For instance, the third optical path comprises the light guide, such that at least a part of the third optical path is provided by the light guide.

Advantageously, the first and second optical path comprise a coinciding part wherein a part of the first and the second optical path coincide wherein in the coinciding part the first coherent light beam has a first polarization direction and the second coherent light beam has a second polarization direction different (e.g. orthogonal to) from the first polarization direction. The benefit of such coinciding paths is that environmental influences (e.g. temperature) equally affect the first and second optical path along the coinciding path, while still being able to separate the first and second coherent light beam based on a polarization state or direction.

The device preferably comprises a light source for generating a source light beam, and a first optical element configured for generating the first coherent light beam and the second coherent light beam. The light source may be configured for collimating the source light beam.

The first optical element may comprise a polarizing beam splitter configured for interacting with the source light beam and generating the first light beam and the second light beam.

The first optical element comprises an optical assembly configured for at least once (as a part of the first optical path) guiding light (overlappingly) to and from a reference reflector (e.g. [plane] mirror, retroreflector) to generate a first reference signal and for at least once (as a part of the second optical path) guiding light (overlappingly) to and from a target reflector (e.g. [plane] mirror, retroreflector) to generate a measure signal. This may for instance be achieved using one of a single pass optical assembly (e.g. resembling part of an optical assembly of a single pass interferometer) and a dual pass optical assembly (e.g. resembling part of an optical assembly of a dual pass interferometer), for instance comprising a retroreflector. Preferably, the first optical element comprises a dual pass optical assembly, because a reflective target of the interferometer only has to be used to fold the beam towards the retroreflector. As a result, the target mirror can be a plane mirror with a less stringent tolerances on the rotation. For metrology of stage position this advantage is critical as a plane mirror can translate in a direction orthogonal to the measurement direction without affecting the measurement, creating the possibility for a decoupled orthogonal displacement measurement. The less stringent tolerance on the rotation of the mirror translates to an acceptance for a rotation of the measured stage.

Typically, a dual pass interferometer comprises a dual pass optical assembly comprising at least two reflectors (e.g. mirrors) configured orthogonal from one another, in that the planes formed by each of the at least two reflectors are configured orthogonal from one another, and facing adjacent sides of the polarizing beam splitter, wherein each reflector of the two reflectors is configured for reflecting a different one of the first and the second light beam towards the polarizing beam splitter. Furthermore, the optical path between the polarizing beam splitter and a corresponding reflector may comprise a means for switching a polarization direction between the first and the second direction of polarization. Such means for instance comprise a quarter wave plate configured for interacting with the corresponding first and second light beam before and after reflection by the corresponding reflector of the two reflectors.

Advantageously, a device according to the present invention further comprises a beam splitter configured for interacting with the source light beam and generating the third light beam. This allows the use of a single light source for determining the position of the target. Examples of suitable beam splitters comprise fiber-based beam splitters and free-space beam splitters.

In an embodiment according to the invention, the means advantageously comprise a second optical element downstream of the first optical element configured for generating interference between the first reference signal and the second reference signal and the second interference pattern, wherein the second optical element comprises a first output connected to a first detector and a second output connected to a second detector.

The second optical element preferably comprises a further polarizing beam splitter configured for splitting the first and the second optical path, a first polarizer downstream from the further polarizing beam splitter configured for generating the first interference signal and a second polarizer downstream from the further polarizing beam splitter configured for generating the second interference signal.

Devices according to the present invention are particularly beneficial in situations wherein multiple measurements need to be compared, such as in situations where a position is determined along multiple axes. Such a system, for instance comprises a plurality of devices as described herein. Preferably, individual ones of the plurality of devices are configured for measuring a position along a plurality of axes. Advantageously, such a system comprises a common light source for generating a source light beam, wherein the common light source is configured upstream of the plurality of devices. The benefit of such a system, for instance comprising a single laser source (e.g modulated line locked laser source) as the common light source, is suitable for performing a number of independent position measurements each with approximately the same (optimized) modulation depth.

As will be evident to the person skilled in the art, various segments along the different optical paths may be configured in a free-space or fiber-based solution. Preferably, fibers used in a fiber-based solution are configured for maintaining a polarization state, such polarizing maintaining fibers are used to make the measurements less sensitive to fiber deformation.

The device may comprise a light generating means comprising a light source configured for switching between a first state and a second state, for instance a laser configured for being modulated between the first state and the second state. In the first state (e.g. at a first instance of time), the light generating means may be configured for generating light at a first single wavelength. In the second state (e.g. at a second instance of time), the light generating means may be configured for generating light at a second single wavelength different from the first wavelength. Preferably, light source generates a coherent (collimated) light beam, which may downstream be used to generate a first, a second and a third (collimated) coherent light beam for instance by splitting the coherent light beam using a plurality of beam splitters. The light source for instance comprises a tuneable homodyne laser, which generally low-cost light source. Switching the wavelength between two states can be achieved by frequency modulation of the light generating means such as the light source. For instance, the light generating means comprises a modulator configured to modulate a frequency of the light generating means such that in the first state light is generated at a first single wavelength and that in the second state light is generated at a second single wavelength. Such modulator may for instance be configured to adapt a parameter of the light source such as such as a current, a voltage or a temperature.

The device may further comprise an optical means (e.g. first optical element) downstream of the light generating means configured for generating a first (coherent) reference signal, a (coherent) measure signal and a second (coherent) reference signal. The optical means may comprise a first, a second and a third optical path. The first optical path may be configured for generating the first reference signal by guiding light (e.g. the first reference beam) generated by the light generating means. The second optical path may comprise a movable target and be configured for generating the measure signal by guiding light (e.g. the measure/target beam) generated by the light generating means. The third optical path may be configured for generating the second reference signal by guiding light (e.g. the second reference beam) generated by the light generating means, wherein the third optical path length is different from the first optical path length and the second optical path length.

Advantageously, the optical means further comprises a delay path providing a common delay between generating the second reference signal and generating the first reference signal and between generating the second reference signal and generating the measure signal. Such delay path is beneficially provided upstream of the optical assembly. Preferably, the optical means comprises a light guide configured as a delay path providing the common delay. Using a light guide as a common delay has the benefit that it can be used to introduce a large and identical path length difference the first reference and the second signal and between the measure signal and the second reference beam in a relatively small space. If such light guide is much longer than the measurement range of the movable target, the relative variation in path length difference for independent measurements axes is minimized. Furthermore, since the modulation depth is proportional to the path length difference between the interfered beams the variation in modulation depth between independent devices can also be minimized.

For instance, the third optical path comprises the delay path in a part of the third optical path not coinciding with the first and second optical. Beneficially, a joint optical path shared between the first and second optical path, but not coinciding with the third optical path, comprises the light guide, such that at least a part of the first and second optical path comprises the delay path provided by the light guide. The benefit of the latter example is that the light guide may be shorter than in the former example, because the first and second optical path length typically already has to be longer on account of the optical path to and from the reference and target mirror, respectively.

The device may further comprise a detecting means, for instance comprising the second optical element, provided downstream of the optical assembly. The detecting means may be configured for generating a first interference signal between the first reference signal and a first portion of the second reference signal. The detecting means may further be configured for generating a second interference signal between the measure signal and a second portion of the second reference signal. The detecting means may further be configured for detecting the first interference signal and the second interference signal. To this end, the detecting means may comprise a first and a second detector, respectively.

The device may further comprise a processing means configured for determining a position of the target. The position may be determined by calculating a difference between the first optical path length and the second optical path length, wherein the difference may be based on the first and second interference signal in both the first and the second state.

To determine the position of the target, the processing means may be configured to determine a quadrature by demodulating each of the first and second interference signal according to a demodulation scheme. Several modulation schemes will be suitable, as will be apparent to a person skilled in the art. For instance, the first and second interference signal may be demodulated at a first frequency corresponding to a modulation frequency and at a second frequency corresponding to twice the modulation frequency. Another example is to filter the first and second interference signal using a low pass filter and to demodulate the first and second interference signal at a modulation frequency. The modulation frequency being the frequency wherein the light generating means is modulated or switched between the first and second state.

The optical means may comprise a first joint optical path wherein the first, the second and the third optical path overlap. The first joint optical path may comprise a first end comprising an optical pickup optically connected to the light generating means. The first joint optical path may comprise a second end downstream from the first end, wherein the second end may be configured for splitting off the third optical path. For instance, the second end comprises a first beam splitter being configured for splitting off the third optical path from the first and second optical path. Preferably, a light guide is provided downstream of the first joint optical path, such that at least part of the third optical path downstream of the first joint optical path comprises or is provided by the light guide. A first joint optical path has the benefit that it enables the use of a single light source for generating the first reference signal, the measure signal and the second reference signal. Furthermore, it eliminates path length differences along the overlapping parts of the respective optical paths.

Preferably, the optical means comprises a second joint optical path (downstream of the first joint optical path), wherein the first and second optical path overlap (e.g. a coinciding part). The second joint optical path and the third optical path do not coincide. The second joint optical path may comprise a first end optically connected to the first beam splitter. The second joint optical path may comprise a second end downstream from the first end. The second end may be configured for separating the first and the second optical path, for instance for splitting off the second optical path from the first optical path. Preferably, the second end comprises a second beam splitter (e.g. forming part of the first optical element) configured for splitting off the second optical path, such as a first polarizing beam splitter (e.g. the polarizing beam splitter of the first optical element). Advantageously, the second joint optical path comprises a further light guide. A second joint optical path has the benefit that it enables the use of a single light source for generating the first reference signal and the measure signal. Furthermore, it eliminates path length differences along the overlapping parts of the respective optical paths.

The optical means preferably comprise an optical assembly resembling optical assemblies used in a Michelson interferometer in that it is configured to (overlappingly) guide light to and from a target reflector (e.g. [plane] mirror, retroreflector) and to (overlappingly) guide light to and from a reference reflector (e.g. [plane mirror, retroreflector). Such optical assembly configured to (overlappingly) guide light to and from a target reflector and to overlappingly guide light to and from a reference reflector, without providing the interference as such, may be referred to as a Michelson-like optical assembly in the present disclosure. The first and second optical path may be configured to traverse the optical assembly. The optical assembly may be configured as one of a single pass (mirror) interferometer and a dual pass (mirror) optical assembly. The benefit of a double pass optical assembly is that the movable target may be a reflective target mirror that is only used to fold the beam towards the retroreflector. As a result, the target mirror can be a plane mirror with a less stringent tolerances on the rotation. For metrology of stage position this advantage is critical as a plane mirror can translate in a direction orthogonal to the measurement direction without affecting the measurement, creating the possibility for a decoupled orthogonal displacement measurement. The less stringent tolerance on the rotation of the mirror translates to an acceptance for a rotation of the measured stage. Another advantage is that an equal amount of glass length for both beams or optical paths offers a high thermal stability.

For example, the optical assembly comprises a polarizing beam splitter, a retroreflector, a target mirror, a reference mirror and a first quarter wave plate and a second quarter wave plate. A first side of the polarizing beam splitter may be configured to receive the first coherent reference signal and the coherent measure signal. A second side of the polarizing beam splitter may be configured to face the reference mirror, wherein the first quarter wave plate may be interposed between the polarizing beam splitter and the reference mirror. A third side of the polarizing beam splitter may be configured to face the target mirror, wherein the second wave plate may be interposed between the polarizing beam splitter and the target mirror. A fourth side of the polarizing beam splitter may be configured to face the retroreflector. The first, second, third and fourth side may form adjacent sides of the polarizing beam splitter. For instance, the first side may be provided opposite and optionally parallel to one of the second and third side. The fourth side and another one of the second and third side may both be provided adjacent and optionally orthogonal to first side. The other one of the second and third side may be provided adjacent and optionally orthogonal to the one of the second and third side.

The second beam splitter may be arranged within the optical assembly and form an integral part of the interferometer. Alternatively, the second beam splitter is configured upstream of the optical assembly. In the latter embodiment, the first and second optical path may be spatially separated upstream of the optical assembly and may therefore non-overlappingly traverse the optical assembly.

In some embodiments, the optical means may comprise a third beam splitter configured for generating the first portion and the second portion of the second reference signal. In the event that the first and second optical path are spatially separated upstream of the optical assembly, the third beam splitter may comprise a third polarizing beam splitter. Such third beam splitter and second beam splitter may be part of or form a single beam splitting means.

The detecting means preferably comprise a fourth beam splitter downstream of the optical means or optical assembly configured for generating the first interference signal and the second interference signal. The fourth beam splitter may comprise a second polarizing beam splitter.

The detecting means may further comprise a first (linear) polarizer upstream of the first detector configured for generating the first interference signal. The detecting means may further comprise a second (linear) polarizer upstream of the second detector configured for generating the second interference signal. Such polarizers provide the benefit that these can be rotated to control the intensity ratio between the respective signals to optimize for maximum interference contrast.

The device may comprise a further optical means and a further detecting means. The further optical means and further detecting means may be configured for measuring the position of the target along a different direction than the optical means and the detecting means. Such a device may comprise an additional beam splitter arranged for sharing the light generating means between the optical means and the further optical means. Such beam splitter may be provided between the light generating means and both the optical means and the further optical means.

Advantageously, the light generating means of the device comprises a single light source for generating light in the first and the second state. Preferably the light source comprises a laser.

In a beneficial embodiment, the device may be configured to determine a first and second amplitude of the first and second interference signal, respectively, such that the detection of the first and second interference signal can be controlled. For instance, the sensor head (e.g. the detecting means or the processing means) may be configured to determine the first and second amplitude and be configured to control the detection of the first and second interference signal. Such amplitudes may for instance be determined with a relatively high accuracy in the event it is based on detecting zero crossings of the first and second interference signal.

The device may further comprise an adapting means configured to adapt the optical path length difference such that zero crossings occur in the first and second interference signal. Preferably, the adapting means are configured to adapt or modulate the optical path length difference by at least an optical path length corresponding to one of the first wavelength, the second wavelength and a nominal value of the first and second wavelength, preferably by at least an optical path length corresponding to the larger one of the first and second wavelength. Alternatively, the adapting means are configured to adapt modulate the delay such that the optical path length difference oscillates with an amplitude of at least half of one of the first wavelength, the second wavelength and a nominal value of the first and second wavelength, preferably an amplitude of at least half of the larger one of the first and second wavelength. Beneficially, the adapting means are configured to adapt the common delay with an oscillation frequency preferably of at least 1 Hz, more preferably of at least 10 Hz.

The optical path length difference may be adapted by changing at least one of a refractive index and a length of the path or the delay path. The adapting means may therefore be configured to expose such path to at least one of heat, a shearing force or a magnetic field. Examples of such adapting means comprise a heating element, an actuator and an electromagnetic coil, respectively. For instance, the common delay path (e.g. light guide) may at least in part be exposed to (e.g. wound around) a heating element.

### Brief description of the figures

Aspects of the invention will now be described in more detail with reference to the appended drawings, wherein same reference numerals illustrate same features and wherein:
Fig. 1 represents a generic schematic overview of an embodiment according to the present invention.
Fig. 2 represents a schematic overview of a first embodiment according to the present invention.
Fig. 3 represents a schematic overview of a second embodiment according to the present invention.
Fig. 4 represents a schematic overview of a third embodiment according to the present invention.
Fig. 5A and B represent schematic overviews of a fourth embodiment according to the present invention.
Fig. 6 represents a schematic overview of measured signals between the first and the second state.

### Detailed description of embodiments

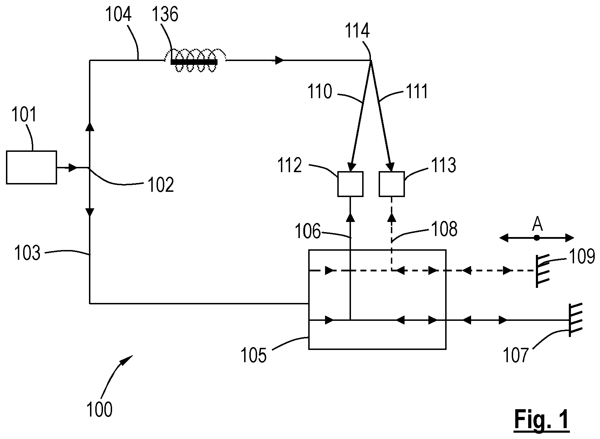

Referring to Fig. 1, embodiments of an interferometer 100 for determining a position of a target reflector along a measurement range A according to the present invention may comprise a single light source 101 (e.g. a laser) providing light to a splitter 102 (e.g a fiber coupler) configured to split the light and guide a first portion comprising a first and second coherent light beam along a coinciding part of a first and second optical path towards a sensor head 105 for instance via a first fiber 103 and guide a second portion comprising a third light beam towards a second fiber 104 configured as a delay line and forming a third optical path. The second fiber 104 is in part exposed to an adapting means 136 configured to change the optical path length of the second fiber 104.

The sensor head 105 splits the light from the first fiber 103 and guides the first coherent light beam along a part of a first optical path non-coinciding with the second optical path to generate a first reference signal 106 and guides the second coherent light beam along a part of a second optical path non-coinciding with the first optical path to generate a measurement signal 108. The first reference beam travels back and forth from between the sensor head 105 and a reflective reference 107 (e.g. a mirror) along the part of the first optical path and the measurement beam travels back and forth between the sensor head 105 and a movable reflective target 109 (e.g. a mirror).

The second fiber 104 guides the third light beam to a further beam splitter 114 which splits the third light beam and guides a first portion 110 of a second reference signal towards a first detector 112 and a second portion 111 of the second reference signal towards a second detector 113.

The first reference signal 106 and the measurement signal 108 are generated after the corresponding one of the first and second coherent light beam have traveled back and forth between the sensor head 105 and the corresponding reflective surface 107, 109, and leaving the sensor head, and are guided towards the first detector 112 and the second detector 113, respectively.

The first detector 112 is configured to generate and measure a first interference signal between the first reference signal 106 and the first portion of the second reference signal 110. The second detector 113 is configured to generate and measure a second interference signal between the measurement signal 108 and the second portion of the second reference signal 111.

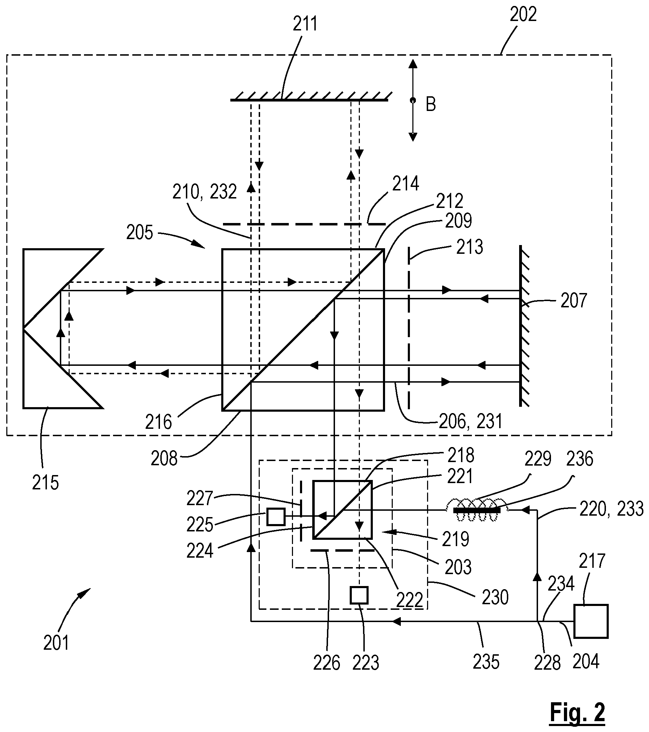

Referring to Fig. 2, an embodiment of a device 201 for determining a position of a target reflector along a measurement range B according to the present invention comprises a sensor head comprising a first optical assembly 202 based on a Michelson interferometer and a second optical assembly 203. In the first optical assembly a bundle of light 204 is split using a first polarizing beam splitter (PBS) 205. The first PBS 205 may for instance be provided in a cube shaped configuration. Such PBS's as the first PBS 205 may comprise a beam splitter coating, for instance configured diagonally from one edge to another edge of a cube shaped PBS. The bundle of light 204 may be directed to a first side 208 of the first PBS 205. A first reference beam 206 exiting the first PBS 205 and having a first polarization state is directed to a reference reflector 207 (e.g. a reference mirror, such as an internal reference mirror) provided at a second side 209 of the first PBS 205. A target beam 210 exiting the first PBS having a second polarization state is directed towards a reflective target 211 at a third side 212 of the first PBS 205. A double pass arrangement may be created by providing a first quarter wave plate (QWP) 213 at the second side 209 and a second QWP 214 at the third side 212 and by providing a retroreflector (RR) 215 at a fourth side 216 of the first PBS 205. In such an embodiment the first reference beam 206 and the target beam 210 pass the first QWP 213 and the second QWP 214 respectively two times thereby switching the polarization state between the first and the second state.

A light source 217 configured for oscillating at a single frequency (e.g. a diode) at a time is provided. The light source is switchable between a first state having a first wavelength and a second state having a second wavelength. The light source 217 for instance provides a bundle of light 204, for instance a bundle of collimated light generated by a laser, to a first joint optical path 234. The bundle of light 204 may travel in free-space or may at least in part travel through a fiber for instance comprising an angle polished fiber end, wherein a collimator may be provided downstream of the angle polished fiber end. The bundle of light 204 comprises light having multiple polarization states for instance light having a first polarization state (e.g. P-polarized light) and light having a second polarization state (e.g. S-polarized light). A part of the bundle of light is guided along a second joint optical path 235 and directed towards an off-center location of the first side 208 of the first PBS 205. The first PBS 205 splits the bundle of light into a first light beam 206 (e.g. first reference beam) having the first polarization state (e.g. P-polarized light) and a second light beam 210 (e.g. target beam) having the second polarization state (e.g. S-polarized light).

The first reference beam 206 travels along the first optical path 231 and is separated from the part of the bundle of light guided along the second joint optical path 235 by an interaction with the first PBS 205 (e.g. a beam splitter coating provided in the first PBS), which is configured to reflect light in the first polarization state. The first QWP 213 changes the linear first polarization state of the reference beam 206 into a circular polarization state. The reflective first reference reflector 207 then changes the propagation direction of the reference beam 206 without changing the rotation of the polarization, which changes the handedness of the circular polarization. A consecutive pass through the first QWP 213 changes the polarization state from circular polarized light into light having a linear second polarization state. The reference beam 206 in the second polarization state is transmitted through the first PBS 205 and is reflected at the RR 215. The reference beam 206 reflected by the RR 215 retains its second polarization state and is transmitted back towards the first PBS 205 and enters the first PBS 205 at a location offset from where it emerged from the first PBS 205 just before being reflected by RR 215. The reference beam 206 is then transmitted through the first PBS 205 towards the reflective first target 207. The first QWP 213 transforms the second polarization state into a circular polarization, the reflection at the reflective reference reflector 207 changes the handedness and a consecutive pass through the first QWP 213 transforms the polarization state from this circular polarization into a linear first polarization state. This light having a first polarization state is then reflected by the first PBS 205 (e.g. the beam splitter coating of the first PBS) and is directed to a second optical assembly 203 arranged at another off-center location of the first side 208 of the first PBS 205 next to the off-center location.

The target beam 210 travels along the second optical path 232 and is separated from the part of the bundle of light guided along the second joint optical path 235 an interaction with the first PBS 205 (e.g. the beam splitter coating provided in the first PBS), which is configured to transmit light in the second polarization state. The same principle as for the first reference beam 206 is used here to create a double pass arrangement for this target beam. The second QWP 214 changes the linear second polarization state of the target beam into a circular polarization state. The reflective target 211 then changes the propagation direction of the target beam without changing the rotation of the polarization, which changes the handedness of the circular polarization. A consecutive pass through the second QWP 214 changes the polarization state of the light from a circular polarized state into a linear first polarization state. The light in the first polarization state is reflected by the beam splitter coating of the first PBS 205 towards the RR 215, which in turn reflects the target beam towards the first PBS 205 retaining the first polarization state. The target beam is then reflected by the beam splitter coating of the first PBS 205 towards the reflective target 211. The second QWP 214 transforms the first polarization state of the light of the target beam into a circular polarization, the reflection at the reflective target 211 changes the handedness and a consecutive pass through the second QWP 214 transforms this circular polarization state into a linear second polarization state. This light having a second polarization state is then transmitted by the first PBS 205 and directed towards the second optical assembly 203 arranged at the other off-center location of the first side 208 of the first PBS 205 next to the off-center location.

The advantage of such a first optical assembly 202 providing a double pass arrangement is that the reflective target mirror 211 is only used to fold the beam towards the retroreflector. As a result, the target mirror can be a plane mirror with a less stringent tolerances on the rotation. For metrology of stage position this advantage is critical as a plane mirror can translate in a direction orthogonal to the measurement direction without affecting the measurement, creating the possibility for a decoupled orthogonal displacement measurement. The less stringent tolerance on the rotation of the mirror translates to an acceptance for a rotation of the measured stage.

Another advantage is that an equal amount of glass length for both beams or optical paths offers a high thermal stability. Both the first reference beam 206 and the target beam 210 travel an equal distance through the first PBS 205, respective QWP 213, 214 and RR 215, a thermal expansion or a change in refractive index of the glass of these components is then compensated.

The detecting means 230 comprises a second optical assembly 203 comprising a second PBS 219, which may have a cube shaped configuration, for instance similar to the first PBS 205. The first reference beam 206 and the target beam 210 are directed co-linearly to a first side 218 of the second PBS 219 and are separated from each other by a beam splitter coating of the second PBS 219. A second collimated reference beam 220, that may have been split off the bundle of coherent laser light generated by the laser 217 using a beam splitter 228 (e.g. fiber coupler) and that may have traveled along a third optical path 233 configured for providing a delay 229 for instance comprising a delay line (e.g. a fiber), is directed towards a second side 221 of the second PBS 219, such that this light strikes the beam splitter coating of the second PBS 219 at a same location as the both the first reference beam 206 and the target beam 210 but at opposing sides of the beam splitter coating of the second PBS 219. Embodiments comprising a fiber-based delay may comprise an angle polished fiber end and a collimator configured to direct the second collimated reference beam 220 towards the second side 221 of the second PBS 219. The delay 229 is in part exposed to an adapting means 236 configured to change the optical path length of the delay 229.

A first portion of the second reference beam 220 having a second polarization state is transmitted by the second PBS 219 and travels together with the first reference beam 206 having the first polarization state and being reflected by the second PBS 219 towards a first sensor 225 (e.g. first detector) arranged at a third side 224 of the second PBS 219 adjacent to the first side 218. A second portion of the second reference beam 220 having a first polarization state is reflected by the second PBS 219 and travels together with the target beam 210 having a second polarization state and being transmitted by the second PBS towards a second sensor 223 (e.g. second detector) arranged at a fourth side 222 of the second PBS 219 opposite to the first side 218.

The second PBS 219 further comprises a first polarizer 227 and a second polarizer 226 provided at the third 224 and the fourth 222 side of the second PBS, respectively. First and second polarizers 226, 227 can be linear polarizers. The first reference beam 206 and the first portion of the second reference beam 220 are directed though the first polarizer 227 to generate interference between the first reference beam 206 and the first portion of the second reference beam 220 that can be sensed by the first sensor 225. The target beam 210 and the second portion of the second reference beam 220 are directed though the second polarizer 226 to generate interference between the target beam 210 and the second portion of the second reference beam 220 that can be sensed by the second sensor 223. Optionally, such (linear) polarizer can be rotated to control the intensity ratio between the respective beams to optimize for maximum interference contrast. The first and/or second sensor 223, 225 may comprise a photodiode as a detector to detect the interference signal. Furthermore, the first and/or second 223, 225 sensor may comprise one or more fiber optical pickups for picking up the interference signal and relaying it to the corresponding detector. In the second optical assembly 203 the optical path length for both the first reference beam 206 and the target beam 210 correspond in a part wherein these paths overlap. After these paths of the first reference beam 206 and the target beam 210 are split by a beam splitter coating of the second PBS, the optical path length of the target beam 210 and second portion of the second reference beam 220 correspond and the optical path length of the first reference beam 210 and first portion of the second reference beam 220 correspond. As a result, any path length deviation, for instance caused by environmental factors such as temperature changes, equally influence the first and the second, the first and the third and/or the second and the third optical path and can therefore be directly compensated for or can be measured and compensated for by a processing means.

The benefit of providing a delay line for creating the second reference beam 220 is that a long and identical path difference between the first reference beam 206 and the second reference beam 220 and between the target beam 210 and the second reference beam 220 can be created. If such delay line is much longer than the measurement range, the relative variation in path length difference for independent measurements axes is minimized.

Furthermore, since the modulation depth is proportional to the path length difference between the interfered beams the variation in modulation depth between independent devices can also be minimized. With this setup one laser source (e.g. a modulated line locked laser source) can be used to provide the input for a number of independent position measurements, each with approximately the same optimal modulation depth. This is for instance ideally suitable for a system comprising devices for measuring a relative position along multiple axes.

The sensor head shown in Fig. 2 can be adapted to provide a differential measurement by removing the reflective reference 207 and folding both measurement paths, for instance by introducing a mirror, to align them parallel before travelling through the quarter wave plates.

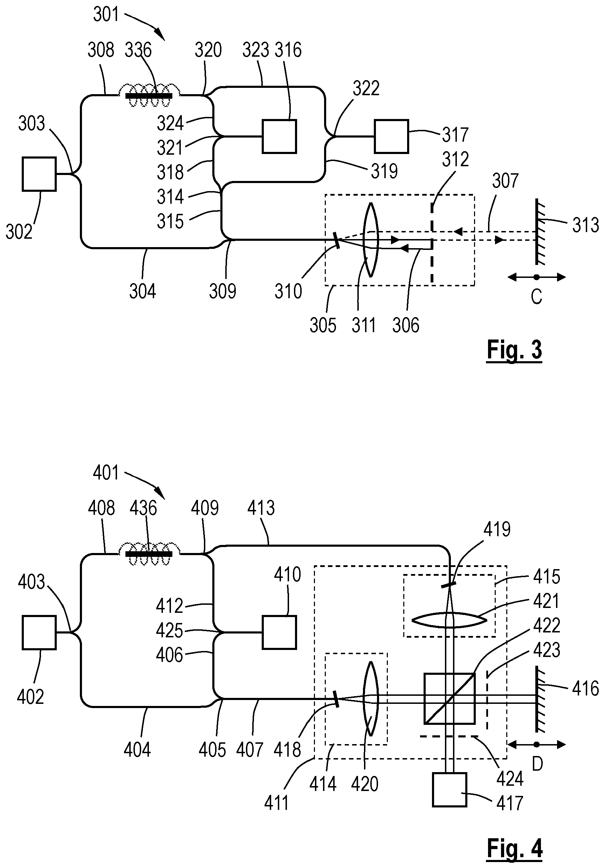

Referring to Fig. 3, embodiments of a device 301 for determining a position of a target reflector along a measurement range C according to the present invention may also comprise solutions being primarily fiber-based. For example, the light from the source 302 is split by a first splitter, such as a first fiber coupler 303 configured to split the light and guide a first portion for instance via a first fiber 304 towards a sensor head 305. The first splitter is further configured to guide a second portion towards a second fiber 308, for instance configured as a delay line, thereby providing a second reference beam. The second fiber 308 is in part exposed to an adapting means 336 configured to change the optical path length of the second fiber 308.

The sensor head 305 is configured to split the first portion into a first reference beam 306 having a first polarization state and a target beam 307 having a second polarization state. To this end, the sensor head 305 may comprise a reflective polarizer 312 for splitting the first portion into the first reference beam 306 and the target beam 307. The sensor head 305 can further comprise a second fiber coupler 309, a fiber end 310 (e.g. an angle polished fiber end) and a collimator 311. The first reference beam 306 is reflected by the reflective polarizer 312, which thereby acts as a reference reflector, and subsequently enters the second fiber coupler 309. The target beam 307 passes through the reflective polarizer 312 and is reflected by the reflective target 313 and subsequently enters the second fiber coupler 309.

The second fiber coupler 309 passes part of the reflected first reference beam 306 and part of the reflected target beam 312 towards a first fiber-based polarizing beam splitter 314, for instance via a third fiber 315. The first fiber-based polarizing beam splitter 314 splits the first reference beam and the target beam according to their polarization states and guides the first reference beam (e.g. in a first polarization state) towards a first sensor 316 (e.g. first detector) and the target beam (e.g. in a second polarization state) towards a second sensor 317 (e.g. second detector), for instance via a fourth and fifth fiber 318, 319, respectively.

The second fiber 308 is configured for guiding the second reference beam towards a second fiber-based polarizing beam splitter 320. The second fiber-based polarizing beam splitter 320 may be configured for splitting the second reference beam into a first portion 323 comprising light having a first polarization state (e.g. a P polarization state) and a second portion 324 comprising light having a second polarization state (e.g. an S polarization state). The first portion 323 is led to one of the first and second sensor and the second portion 324 is led to the other one of the first and second sensor. For instance, such that the first portion 323 of the second reference beam is combined with one of the first reference beam 306 and the target beam 307 (e.g. the target beam) having a same polarization state as the first portion 323 and such that the second portion 324 of the second reference beam is combined with another one of the first reference beam 306 and the target beam 307 (e.g. the first reference beam) having a same polarization state as the second portion 324.

The first and second sensor 316, 317 comprise a third and a fourth fiber coupler 321, 322, respectively. The fourth fiber coupler 322 may be configured for combining the first portion 323 with the one of the first reference beam 306 and the target beam 307. The third fiber coupler 321 may be configured for combining the second portion 324 with the other one of the first reference beam 306 and the target beam 307. The third and fourth fiber coupler 321, 322 may be configured for generating an interference signal between the corresponding beams combined by the respective fiber coupler.

Referring to Fig. 4, embodiments of a device 401 for determining a position of a target reflector along a measurement range D according to the present invention may also comprise solutions being partly fiber-based and partly free-space. For example, the light from the source 402 is split by a first splitter, such as a first fiber coupler 403 configured to split the light and guide a first portion for instance via a first fiber 404 towards a first fiber-based polarizing beam splitter 405. The first fiber-based polarizing beam splitter 405 is configured for splitting the first portion into a first reference beam having a first polarization state (e.g. a P polarization state) and a target beam having a second polarization state (e.g. an S polarization state), the first reference beam being guided towards a first sensor 410 (first detector) by for instance a second fiber 406 and the target beam being guided towards a sensor head 411 configured as a free-space optical assembly by for instance a third fiber 407.

The first splitter is further configured to guide a second portion towards a fourth fiber 408, for instance configured as a delay line, thereby providing a second reference beam. The fourth fiber 408 is in part exposed to an adapting means 436 configured to change the optical path length of the fourth fiber 408.The second reference beam may be guided by the fourth fiber 408 towards a second fiber-based polarizing beam splitter 409. The second fiber-based polarizing beam splitter 409 may be configured for splitting the second reference beam into a first portion comprising light having a third polarization state (e.g. a P polarization state) and a second portion comprising light having a fourth polarization state (e.g. an S polarization state). The first portion is led to one of the first sensor 410 and the sensor head 411 and the second portion is led to the other one of the first sensor 410 and the sensor head 411. For instance, such that the first portion of the second reference beam is combined with one of the first reference beam and the target beam (e.g. the target beam) having a same polarization state as the first portion. For instance, the first portion is guided towards the first sensor 410 via a fifth fiber 412 and the second portion is guided towards the sensor head 411 via a sixth fiber 413. To that end, light travelling through the second fiber 406 and light traveling through the fifth fiber 412 may be combined by a second fiber coupler 425.

The sensor head 411 comprises a first input 414, a second input 415, an in-/output towards a reflective target 416 and an output towards a second sensor 417 (e.g. second detector) and is configured for sensing an interference between the first and the second input. The first input 414 is configured to receive the target beam and the second input 415 is configured to receive one of the first and the second portion of the second reference beam, preferably the one having a same polarization state as the target beam (e.g. the second portion). The first and the second input 414, 415 of the free-space optical assembly for instance each comprise a fiber end 418, 419 (e.g. an angle polished fiber end) and a collimator 420, 421. The optical assembly may further comprise a PBS 422, a QWP 423 configured between the PBS 422 and the reflective target 416 and a polarizer 424 configured between the PBS 422 and the second sensor 417.

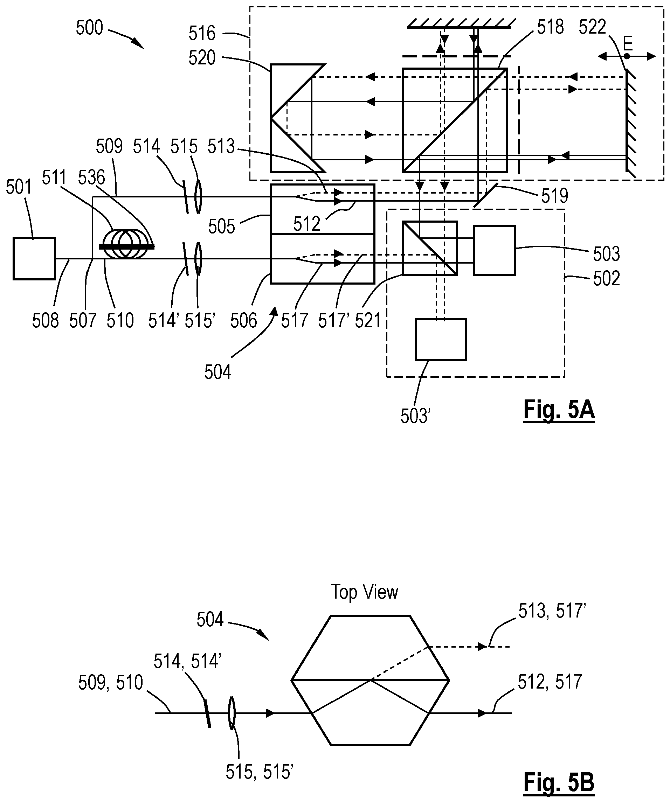

Referring to Fig. 5A and B, in a preferred embodiment of a device 500 for determining a position of a target reflector along a measurement range E according to the present invention a light generating means 501 configured to subsequently generate coherent light at a first wavelength and a second wavelength. The light generated by the light generating means 501 travels along three optical paths, preferably each having a distinct optical path length, towards a detecting means 502 for detecting interference patterns. The first optical path may provide a first reference signal, the second optical path may provide a measure signal and the third optical path may provide a second reference signal. The detecting means 502 comprises two detectors 503, 503', wherein one of the two detectors 503, 503' is configured for determining a first interference signal between the first reference signal and the second reference signal and wherein another one of the two detectors 503, 503' is configured for determining a second interference signal between the measure signal and the second reference signal. In comparison to the example of Fig. 2, wherein the second PBS 219 of the detecting means itself is configured to split the second reference signal into a first portion and a second portion, in the example of Fig. 5, a beam splitting means 504 (forming the first PBS 505 and the third PBS 506) of the optical means is configured for generating the first portion and the second portion of the second reference signals.

The coherent light generated by the light generating means 501 travels towards a first beam splitter 507 (e.g. fiber coupler) along a first joint optical path 508 that may comprise the first, the second and the third optical path. The first beam splitter 507 may then split the optical paths into a second joint optical path 509 that may comprise the first and the second optical path, and a third optical path 510. This embodiment may be configured in free-space, but may also be at least in part fiber-based.

For such an at least fiber-based solution, the first joint optical path 508, the second joint optical path 509 and/or the third optical path 510 may travel along a light guide. Such a light guide of the third optical path 509 or the second joint optical path 510 may comprise a delay path or line 511 to create a common delay between the third optical path 510 and the first optical path 512 on the one hand and the third optical path 510 and the second optical path 513 on the other hand. The delay path 511 is in part exposed to an adapting means 536 configured to change the optical path length of the delay path 511. The light guides of the second joint optical path 509 and the third optical path 510 may each comprise a fiber end 514, 514' (e.g. angle polished fiber end) and a collimator 515, 515' configured to provide two collimated light beams, one comprising the first and the second coherent light beam and another one comprising the third coherent light beam.

The two collimated light beams travel towards the beam splitting means 504. The beam splitting means 504 may be configured to split each of the collimated light beams into two parallel spatially separated light beams, wherein the dashed and solid lines represent light traveling in different planes separated along a direction orthogonal to the image plane. Fig. 5B shows a top view of a suitable beam splitting means 504. The beam splitting means 504 (e.g. a modified cube beamsplitter or a Wollaston prism) may be configured to form a first PBS 505, wherein the first and the second optical path are split. The first PBS 505 of the beam splitting means 504 may be configured to generate the first and the second light beam, wherein light of the first polarization and the second polarization state travel towards the optical assembly 516 along the first and the second optical path, respectively. The beam splitting means 504 may further be configured to form a third PBS 506, wherein the third optical path is split into two corresponding third optical paths 517, 517'. One of the two corresponding third optical paths 517, 517' may be configured for generating the first portion of the second coherent reference signal. Another one of the two corresponding third optical paths 517, 517' may be configured for generating the second portion of the second coherent reference signal. The first and the second portion may comprise light having a third and a fourth polarization state, respectively. Preferably, the third and fourth polarization state correspond to the first and the second polarization state, respectively.

The spatially separated and parallel first and second light beam are directed to a corresponding first and second off-center location of a first side 518 of a PBS (e.g. a fourth PBS) of the optical assembly 516, respectively. A mirror 519 may be provided to direct the first and the second light beam towards the optical assembly 516 comprising a movable reflective target 522. The optical assembly functions in a similar manner as the optical assembly 202 of the example shown in Fig. 2, with the exception that the first and second optical path do not overlap within the interferometer 516 of the example shown in Fig. 5. The RR 520 in the example of Fig. 5 may for instance be a Cube corner retroreflector or a cat's eye retroreflector, thus changing the plane wherein light travels between entering and exiting the RR 520. After exiting the optical assembly, both the first light beam and the second light beam enter the detecting means 502.

The detecting means 502 comprises a third beam splitter 521. Preferably, the third beam splitter is a polarizing beam splitter (e.g. the second PBS), but can also be a non-polarizing beam splitter. The first optical path 512 and the second optical path 513 enter a first side (at respective non-overlapping locations) of the third beam splitter 521 and both of the two corresponding third optical paths 517, 517' enter a second side (at respective non-overlapping locations) of the third beam splitter 521 adjacent to the first side. The third beam splitter 521 may be configured such that the first optical path 512 and one of the two corresponding third optical paths 517, 517' overlap downstream of the third beam splitter 521 and may exit the third beam splitter at a third side. The third beam splitter may further be configured such that the second optical path 513 and another one of the two corresponding third optical paths 517, 517' overlap downstream of the third beam splitter 521 and may exit the third beam splitter at a fourth side. Linear polarizers may be provided between the third beam splitter and each of the two detectors 503, 503', wherein the linear polarizers are configured to generate a first and a second interference signal.

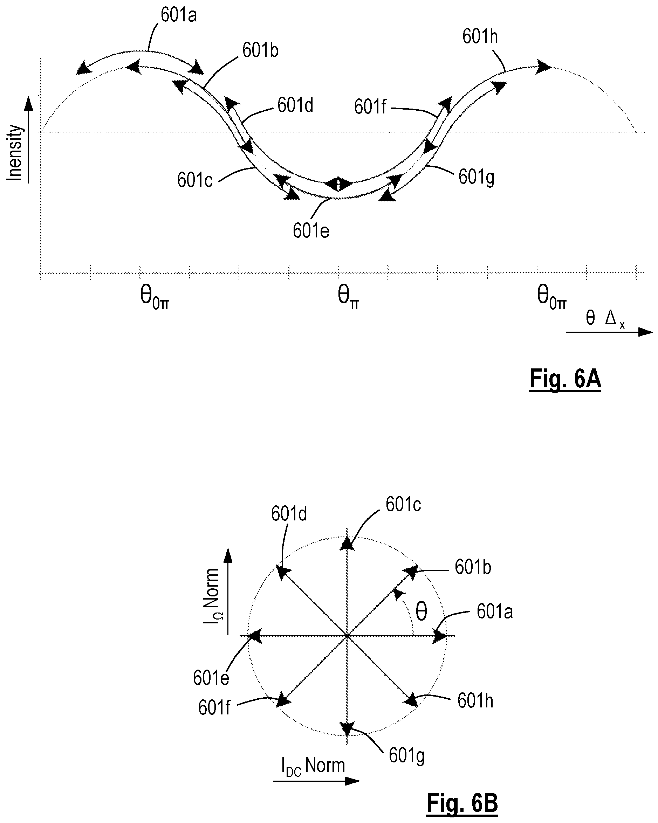

Referring to Fig. 6, the following wave functions relate to two signals, for instance the measure signal and the first reference signal or to the first reference signal and the second reference signal: ${ψ}_{1} = {I}_{0} {e}^{\frac{2 πi}{λ} \left(x+ct\right)}$ ${ψ}_{2} = {I}_{0} {e}^{\frac{2 π}{λ} \left(x+ct+Δx\right)}$ Where *λ* is the wavelength of the laser, and Δ*x* is the difference in path length between the two signals. Once the two signals have travelled along their respective paths the total wavefunction becomes: $ψ = {ψ}_{1} + {ψ}_{2} = {I}_{0} \left({e}^{\frac{2 πi}{λ} \left(x+ct\right)}+{e}^{\frac{2 πi}{λ} \left(x+ct+Δx\right)}\right)$ The interference between these two signals is given by the following equation: $\begin{matrix}{I}_{p} = {ψψ}^{∗} \\ = {I}_{0}^{2} \left({e}^{\frac{2 πi}{λ} \left(x+ct\right)}+{e}^{\frac{2 πi}{λ} \left(x+ct+Δx\right)}\right) \left({e}^{- \frac{2 πi}{λ} \left(x+ct\right)}+{e}^{- \frac{2 πi}{λ} \left(x+ct+Δx\right)}\right) \\ = {I}_{0}^{2} \left(2+{e}^{\frac{2 πi}{λ} Δ x}+{e}^{- \frac{2 πi}{λ} Δ x}\right) \\ = 2 {I}_{0}^{2} \left(1+cos\left(\frac{2 π}{λ}Δx\right)\right)\end{matrix}$ Referring to this equation, the difference in the travelled distance between the two signals introduces a phase difference between the two signals, which results in an interference. The phase difference between the two signals is given by the difference in travelled distance Δ*x*. The resulting interference however does not carry information regarding the sign of the phase difference. By varying the laser wavelength between two states each having a different wavelength, the phase also passes between these two states. This may be used to resolve the sign information of the phase difference and/or improving the resolution of Δ*x* by levelling the resolution throughout the range of Δ*x*. The phase that can be measured in shown in Fig. 6A. Each of the different arrows 601a-601h denotes a different phase. The change in wavelength will result in a change in phase which is shown in Fig, 6B. The length of the arrows relates to the modulation depth of the oscillation. This modulation depth is given by: $δ Φ \left[rad\right] = \left[δλ\frac{2 π}{λ}\right] \left[\frac{Δ x}{λ}\right] {n}_{medium} = \frac{2 π Δ {xn}_{medium}}{{λ}^{2}} δλ$ Where *δ*Φ is the modulation depth in radians, *δλ* is the change in wavelength of the source laser between the two different phases. *λ* is the centre wavelength of the source laser. Δ*x* is the difference in path length between the two interference signals and *n_{medium}* is the refractive index of the medium.

The device and method may measure the target distance using the following equation:
*I*(*x*) = *I*₀ *+ I_{c}cos*(*x*)Where *l* is the intensity of the interference signal as a function of target distance x, *l₀* is an offset of the interference signal and *l_{c}* is a contract of the interference signal. The offset and contrast are determined by the amount of light that enters the detecting means and electrical components of the detecting means, such as the photodiode and electronic circuitry, for instance comprising an ADC. If the offset and contrast are only determined by the photodiode and the electronic circuitry, the offset will always be larger than the contrast. This will result in a signal where the range of the signal is determined by: $0 < {I}_{0} - {I}_{c} < I \left(x\right) < {I}_{0} + {I}_{c} < 2 \times {I}_{0}$ This range can be shifted by the circuitry to optimize the generation of the signal by the ADC. In a beneficial embodiment, the range from *I*₀ - *I_{c}* to *I*₀ *+ I_{c}* is mapped to the full range of the ADC. During execution of the method or operation of the device, this range may be adjusted continuously to achieve an optimal signal.

A method for determining this range is to detect the zero crossings of the signal, where *I*(*x*) = *I*₀*.* However, during initialisation or when the target of the interferometer is not moving, it is possible that the range shifts such that it lies outside of an expected range (e.g. *I*_{0*expected*}, *I_{cexpected}*) and thus a zero crossing never occurs. For instance, this occurs in the event that: ${I}_{{0}_{expected}} < I \left(x\right) < {I}_{{0}_{expected}} + {I}_{{c}_{expected}}$ In such event, a naïve algorithm for detecting zero crossings can not recover. Examples of situations where this may occur are: if during initialization the target rotates and thus the intensity of the target signal is decreased, or if during operation the target is stationary and the electronics undergo a thermal drift.

This may be solved by creating a continuous motion of an optical path corresponding to the interference signal, preferably one that does not disturb determining the position of the target, such that zero crossings will occur. This may for instance be achieved by intermittently (thermally) heating at least part of the light guide forming the delay path. This will create an oscillation of the optical path length of the delay path due to thermal expansion and variation of the refractive index of the light guide. This oscillation of the optical path length will automatically be cancelled out when determining the position of the target, because this delay path forms a delay that is incorporated into both the first and second interference signal. Such an embodiment may ensure that the interference signals always contain zero crossing, such that a range of the interference signal may be determined based on a maximum and minimum value of the interference signal. A naïve algorithm that is based on detecting zero crossings may then be used to optimize the signal, for instance by accounting for the thermal drift that interferometers are usually subject to.

## Claims

1. Method for determining a position by optical interferometry of a target reflector along a measurement range (B) comprising the steps of:
• generating by modulation a first, a second and a third coherent light beam at a first single wavelength at a first instance of time and at a second single wavelength different from the first single wavelength at a second instance of time,
• generating a first reference signal by guiding the first coherent light beam (206) along a first optical path (231), wherein the first optical path has a first optical path length,
• generating a measure signal by guiding the second coherent light beam (210) along a second optical path (232) comprising the target reflector (211), wherein the second optical path has a second optical path length,
• generating a second reference signal by guiding the third coherent light beam (220) along a third optical path (233), wherein the third optical path (233) has a third optical path length different from the first optical path length and the second optical path length,
• providing a common delay (229) between generating the second reference signal and generating the first reference signal and between generating the second reference signal and generating the measure signal,
• generating a first interference signal from the first reference signal and a first portion of the second reference signal at the first instance of time and at the second instance of time,
• generating a second interference signal from the measure signal and a second portion of the second reference signal at the first instance of time and the second instance of time,
• determining a first amplitude of the first interference signal and a second amplitude of the second interference signal,
• generating a first signal based on the first interference signal and the first amplitude,
• generating a second signal based on the second interference signal and the second amplitude, and
• determining a position of the target reflector (211) by calculating a difference between the first optical path length and the second optical path length based on the first and the second signal both in the first and the second instance of time.

2. Method according to claim 1, wherein the first and second amplitude are determined by one of detecting zero crossings of the first and second interference signal, and fitting a first and second function to the first and second interference signal, respectively.

3. Method according to claim 1 or 2, wherein the common delay corresponds to an optical path length difference and wherein the optical path length difference is modulated with an amplitude corresponding to at least half of one of the first wavelength, the second wavelength and a nominal value of the first and second wavelength, preferably an amplitude of at least half of the larger one of the first and second wavelength, preferably wherein the optical path length difference oscillates with an oscillation frequency lower than 10 Hz, preferably at most 1 Hz.

4. Method according to claim 3, wherein the optical path length difference is modulated by changing at least one of a length and a refractive index, preferably wherein the optical path length difference is modulated by exposure to at least one of heat, shear stress and a magnetic field.

5. Method according to any one of the previous claims, wherein the position is determined by determining a first and second set of quadrature signals by demodulating the first and second interference signal, respectively, and wherein the common delay (229) has an optical length configured such that an amplitude of each quadrature signal of the first and second set of quadrature signals does not exhibit a zero crossing over the measurement range (B).

6. Method according to any one of the previous claims, wherein generating the first coherent light beam (206) and the second coherent light beam (210) comprises splitting light generated by a light source (217), preferably wherein generating the third coherent light beam (220) comprises splitting light generated by the light source (217).

7. Method according to claim 6, wherein splitting light for generating the first coherent light beam (206) and the second coherent light beam (210) comprises splitting light generated by the light source (217) according to a first and a second polarization state, respectively, preferably wherein the first portion and the second portion of the second reference signal comprises splitting the third coherent light beam (220) according to a third and a fourth polarization state, respectively, preferably the first and the second polarization state correspond to the third and the fourth polarization state respectively.

8. Method according to any one of the previous claims, wherein generating the first reference signal and the measure signal comprises guiding the first (206) and the second (210) coherent light beam in part along a coinciding optical path.

9. Method according to any one of the previous claims, wherein an optical assembly (202) configured for guiding the first coherent light beam (206) to and from a reference reflector (207) and for guiding the second coherent light beam (210) to and from the target refector (211) is used for generating the first reference signal and the measure signal, respectively, preferably wherein the common delay (229) is provided outside the optical assembly (202), preferably wherein the optical assembly (202) comprises a polarizing beam splitter (205), a retroreflector (215), the target reflector (211), the reference reflector (207), a first quarter wave plate (213) and a second quarter wave plate (214), wherein the optical assembly (202) is configured such that a first side (208) of the polarizing beam splitter (205) receives the first (206) and second (210) coherent light beam, and wherein a second side (209), a third side (212) and a fourth side (216) of the polarizing beam splitter (205) face the reference reflector (207), the target reflector (211) and the retroreflector (215), respectively, and wherein the first (213) and second (214) quarter wave plate are interposed between the polarizing beam splitter (205) and the reference reflector (207) and between the polarizing beam splitter (205) and the target reflector (211), respectively, preferably wherein the target reflector (211) comprises a target mirror and wherein the reference reflector (207) comprises a reference mirror.

10. Device for determining by optical interferometry a position of a target reflector (211) along a measurement range (B) comprising,
a light generating means comprising a light source (217) configured for being modulated between a first state and a second state, wherein in the first state the light generating means is configured for generating light at a first single wavelength and in the second state the light generating means is configured for generating light at a second single wavelength different from the first single wavelength,
an optical means downstream of the light generating means configured for generating a first coherent reference signal, a coherent measure signal and a second coherent reference signal, the optical means comprising
a first optical path (231) configured for generating the first coherent reference signal by guiding light generated by the light source (217), wherein the first optical path has a first optical path length,
a second optical path (232) comprising a movable target reflector (211) and configured for generating the coherent measure signal by guiding light generated by the light source (217), wherein the second optical path has a second optical path length,
a third optical path (233) configured for generating the second coherent reference signal by guiding light generated by the light source (217), wherein the third optical path (233) has a third optical path length different from the first optical path length and the second optical path length,
wherein the optical means further comprises a delay path providing a common delay (229) between generating the second coherent reference signal and generating the first coherent reference signal and between generating the second coherent reference signal and generating the coherent measure signal,
a detecting means (230) downstream of the optical means configured for generating a first interference signal between the first coherent reference signal and a first portion of the second coherent reference signal and for generating a second interference signal between the coherent measure signal and a second portion of the second coherent reference signal, and comprising a first detector (225), configured for detecting the first interference signal and determining a first amplitude of the first interference signal, and a second detector (223), configured for detecting the second interference signal and determining a second amplitude of the second interference signal, and configured for generating a first signal based on the first interference signal and the first amplitude, and for generating a second signal based on the second interference signal and the second amplitude, and
a processing means configured for determining a position of the target reflector (211) by calculating a difference between the first optical path length and the second optical path length based on the first and second signal in both the first and the second state, preferably wherein the device is configured to determine the first and second amplitude based on one of detecting zero crossings of the first and second interference signal and fitting a first and second function to the first and second interference signal, respectively, preferably further comprising an adapting means (236) configured to modulate an optical path length difference of the common delay with an amplitude corresponding to at least half of one of the first wavelength, the second wavelength and a nominal value of the first and second wavelength, wherein the amplitude optionally is at least half of the larger one of the first and second wavelength, wherein the adapting means (236) optionally is configured to adapt the common delay with an oscillation frequency lower than 10 Hz, optionally at most 1 Hz, and wherein the adapting means (236) optionally comprises one of a heating element, an actuator and an electromagnetic coil, preferably wherein the processing means is configured to determine the position by determining a first and a second set of quadrature signals by demodulating the first and second interference signal, respectively, and wherein the common delay (229) has an optical length configured such that an amplitude of each quadrature signal of the first and the second set of quadrature signals does not exhibit a zero crossing over the measurement range (B), preferably wherein the optical means further comprise a light guide configured as the delay path providing the common delay (229), preferably wherein the optical means comprises a first joint optical path (234) wherein the first, the second and the third optical path overlap, wherein the first joint optical path comprises a first end comprising an optical pickup optically connected to the light generating means and a second end downstream from the first end comprising a first beam splitter (228), wherein the first beam splitter (228) is configured for splitting off the third optical path (233), wherein a part of the third optical path (233) is optionally provided downstream from the first joint optical path comprises a light guide configured as the delay path providing the common delay (229), and wherein the optical means optionally comprises a second joint optical path (235), wherein the first (206) and second (210) optical path overlap along the second joint optical path, and a second beam splitter, wherein the second joint optical path (235) comprises a first end optically connected to the first beam splitter (228) and a second end downstream from the first end optically connected to the second beam splitter, wherein the second beam splitter is configured for splitting off the second optical path (206), wherein the second joint optical path (206) optionally comprises a further light guide, and wherein the second beam splitter optionally comprises a first polarizing beam splitter, preferably wherein the optical means comprises an optical assembly (202) comprising a polarizing beam splitter (205), a retroreflector (215), the target reflector (211), a reference reflector (207), a first quarter wave plate (213) and a second quarter wave plate (214), wherein the optical assembly (202) is configured such that a first side (208) of the polarizing beam splitter (205) receives the first (206) and second (210) coherent light beam, and wherein a second side (209), a third side (212) and a fourth side (216) of the polarizing beam splitter (205) face the reference reflector (207), the target reflector (211) and the retroreflector (215), respectively, and wherein the first (213) and second (214) quarter wave plate are interposed between the polarizing beam splitter (205) and the reference reflector (207) and between the polarizing beam splitter (205) and the target reflector (211), respectively, wherein the target reflector optionally comprises a target mirror and wherein the reference reflector comprises a reference mirror, preferably wherein the detecting means comprises a fourth beam splitter (219) downstream of the optical means configured for generating the first interference signal and the second interference signal, wherein the fourth beam splitter optionally comprises a second polarizing beam splitter, preferably wherein the light generating means comprises a single light source for generating light in the first and the second state, wherein the light source optionally comprises a laser, preferably wherein the detecting means comprises a first polarizer (227) upstream of the first detector (225) configured for generating the first interference signal and a second polarizer (226) upstream of the second detector (223) configured for generating the second interference signal.

11. Device according to claim 10, wherein the optical means comprises an optical assembly (202) comprising a polarizing beam splitter (205), a retroreflector (215), the target reflector (211), a reference reflector (207), a first quarter wave plate (213) and a second quarter wave plate (214), wherein the optical assembly (202) is configured such that a first side (208) of the polarizing beam splitter (205) receives the first (206) and second (210) coherent light beam, and wherein a second side (209), a third side (212) and a fourth side (216) of the polarizing beam splitter (205) face the reference reflector (207), the target reflector (211) and the retroreflector (215), respectively, and wherein the first (213) and second (214) quarter wave plate are interposed between the polarizing beam splitter (205) and the reference reflector (207) and between the polarizing beam splitter (205) and the target reflector (211), respectively, wherein the optical means comprises a second joint optical path (235), wherein the first (206) and second (210) optical path overlap along the second joint optical path, and a second beam splitter, wherein the second joint optical path (235) comprises a first end optically connected to the first beam splitter (228) and a second end downstream from the first end optically connected to the second beam splitter, wherein the second beam splitter is configured for splitting off the second optical path (206), wherein the second beam splitter is arranged within the optical assembly and forms part of the optical assembly, preferably wherein the first polarizing beam splitter forms the polarizing beam splitter (205).

12. Device according to claim 10, wherein the optical means comprises an optical assembly (202) comprising a polarizing beam splitter (205), a retroreflector (215), the target reflector (211), a reference reflector (207), a first quarter wave plate (213) and a second quarter wave plate (214), wherein the optical assembly (202) is configured such that a first side (208) of the polarizing beam splitter (205) receives the first (206) and second (210) coherent light beam, and wherein a second side (209), a third side (212) and a fourth side (216) of the polarizing beam splitter (205) face the reference reflector (207), the target reflector (211) and the retroreflector (215), respectively, and wherein the first (213) and second (214) quarter wave plate are interposed between the polarizing beam splitter (205) and the reference reflector (207) and between the polarizing beam splitter (205) and the target reflector (211), respectively, wherein the optical means comprises a second joint optical path (235), wherein the first (206) and second (210) optical path overlap along the second joint optical path, and a second beam splitter, wherein the second joint optical path (235) comprises a first end optically connected to the first beam splitter (228) and a second end downstream from the first end optically connected to the second beam splitter, wherein the second beam splitter is configured for splitting off the second optical path (206), wherein the second beam splitter is arranged upstream of the optical assembly and is configured such that the first and second optical path non-overlappingly traverse the optical assembly.

13. Device according to any one of the claims 10 to 12, wherein the optical means comprises a third beam splitter configured for generating the first portion and the second portion of the second coherent reference signal.

14. Device according to claim 10, wherein the optical means comprises an optical assembly (202) comprising a polarizing beam splitter (205), a retroreflector (215), the target reflector (211), a reference reflector (207), a first quarter wave plate (213) and a second quarter wave plate (214), wherein the optical assembly (202) is configured such that a first side (208) of the polarizing beam splitter (205) receives the first (206) and second (210) coherent light beam, and wherein a second side (209), a third side (212) and a fourth side (216) of the polarizing beam splitter (205) face the reference reflector (207), the target reflector (211) and the retroreflector (215), respectively, and wherein the first (213) and second (214) quarter wave plate are interposed between the polarizing beam splitter (205) and the reference reflector (207) and between the polarizing beam splitter (205) and the target reflector (211), respectively, wherein the optical means comprises a second joint optical path (235), wherein the first (206) and second (210) optical path overlap along the second joint optical path, and a second beam splitter, wherein the second joint optical path (235) comprises a first end optically connected to the first beam splitter (228) and a second end downstream from the first end optically connected to the second beam splitter, wherein the second beam splitter is configured for splitting off the second optical path (206), wherein the second beam splitter is arranged upstream of the optical assembly and is configured such that the first and second optical path non-overlappingly traverse the optical assembly, wherein the optical means comprises a third beam splitter configured for generating the first portion and the second portion of the second coherent reference signal, wherein the third beam splitter comprises a third polarizing beam splitter, preferably the second beam splitter and the third beam splitter form a single beam splitting means.

15. Device according to any one of the claims 10 to 14, comprising a further optical means and a further detecting means, wherein the further optical means and further detecting means are configured for measuring the position of the target along a different direction than the optical means and the detecting means, preferably comprising an additional beam splitter arranged for sharing light generated by the light generating means between the optical means and the further optical means, wherein the additional beam splitter is provided between the light generating means and both the optical means and the further optical means.

## Patentansprüche

1. Verfahren zum Bestimmen einer Position durch optische Interferometrie eines Zielreflektors entlang eines Messbereichs (B), umfassend die Schritte:
• Erzeugen, durch Modulation, eines ersten, eines zweiten und eines dritten kohärenten Lichtstrahls bei einer ersten einzelnen Wellenlänge zu einem ersten Zeitpunkt und bei einer zweiten einzelnen Wellenlänge, die sich von der ersten einzelnen Wellenlänge unterscheidet, zu einem zweiten Zeitpunkt,
• Erzeugen eines ersten Referenzsignals durch Leiten des ersten kohärenten Lichtstrahls (206) entlang eines ersten optischen Pfads (231), wobei der erste optische Pfad eine Länge des ersten optischen Pfads aufweist,
• Erzeugen eines Messsignals durch Leiten des zweiten kohärenten Lichtstrahls (210) entlang eines zweiten optischen Pfads (232), umfassend den Zielreflektor (211), wobei der zweite optische Pfad eine Länge des zweiten optischen Pfads aufweist,
• Erzeugen eines zweiten Referenzsignals durch Leiten des dritten kohärenten Lichtstrahls (220) entlang eines dritten optischen Pfads (233), wobei der dritte optische Pfad (233) eine Länge des dritten optischen Pfads, die sich von der Länge des ersten optischen Pfads und der Länge des zweiten optischen Pfads unterscheidet, aufweist,
• Bereitstellen einer gemeinsamen Verzögerung (229) zwischen dem Erzeugen des zweiten Referenzsignals und dem Erzeugen des ersten Referenzsignals und zwischen dem Erzeugen des zweiten Referenzsignals und dem Erzeugen des Messsignals,
• Erzeugen eines ersten Interferenzsignals aus dem ersten Referenzsignal und einem ersten Anteil des zweiten Referenzsignals zu dem ersten Zeitpunkt und zu dem zweiten Zeitpunkt,
• Erzeugen eines zweiten Interferenzsignals aus dem Messsignal und einem zweiten Anteil des zweiten Referenzsignals zu dem ersten Zeitpunkt und dem zweiten Zeitpunkt,
• Bestimmen einer ersten Amplitude des ersten Interferenzsignals und einer zweiten Amplitude des zweiten Interferenzsignals,
• Erzeugen eines ersten Signals basierend auf dem ersten Interferenzsignal und der ersten Amplitude,
• Erzeugen eines zweiten Signals basierend auf dem zweiten Interferenzsignal und der zweiten Amplitude, und
• Bestimmen einer Position des Zielreflektors (211) durch Berechnen eines Unterschieds zwischen der Länge des ersten optischen Pfads und der Länge des zweiten optischen Pfads basierend auf dem ersten und dem zweiten Signal sowohl zu dem ersten als auch dem zweiten Zeitpunkt.

2. Verfahren nach Anspruch 1, wobei die erste und die zweite Amplitude durch eines von Detektieren von Nulldurchgängen des ersten und des zweiten Interferenzsignals und Anpassen einer ersten und einer zweiten Funktion an das erste beziehungsweise das zweite Interferenzsignal bestimmt werden.

3. Verfahren nach Anspruch 1 oder 2, wobei die gemeinsame Verzögerung einem Unterschied der Länge des optischen Pfads entspricht und wobei der Unterschied der Länge des optischen Pfads mit einer Amplitude, die mindestens einer Hälfte von einer der ersten Wellenlänge, der zweiten Wellenlänge und einem Nennwert der ersten und der zweiten Wellenlänge entspricht, vorzugsweise einer Amplitude von mindestens der Hälfte der größeren der ersten und der zweiten Wellenlänge, moduliert wird, vorzugsweise wobei der Unterschied der Länge des optischen Pfads mit einer Oszillationsfrequenz von weniger als 10 Hz, vorzugsweise höchstens 1 Hz, oszilliert.

4. Verfahren nach Anspruch 3, wobei der Unterschied der Länge des optischen Pfads durch Ändern mindestens eines von einer Länge und einem Brechungsindex moduliert wird, vorzugsweise wobei der Unterschied der Länge des optischen Pfads durch Aussetzen gegenüber mindestens einem von Wärme, Schubspannung und einem Magnetfeld moduliert wird.

5. Verfahren nach einem der vorstehenden Ansprüche, wobei die Position durch Bestimmen eines ersten und eines zweiten Satzes von Quadratursignalen durch Demodulieren des ersten beziehungsweise des zweiten Interferenzsignals bestimmt wird, und wobei die gemeinsame Verzögerung (229) eine optische Länge aufweist, die derart konfiguriert ist, dass eine Amplitude jedes Quadratursignals des ersten und des zweiten Satzes von Quadratursignalen über den Messbereich (B) keinen Nulldurchgang vorweist.

6. Verfahren nach einem der vorstehenden Ansprüche, wobei das Erzeugen des ersten kohärenten Lichtstrahls (206) und des zweiten kohärenten Lichtstrahls (210) ein Teilen von Licht, das durch eine Lichtquelle (217) erzeugt wird, umfasst, vorzugsweise wobei das Erzeugen des dritten kohärenten Lichtstrahls (220) das Teilen von Licht, das durch die Lichtquelle (217) erzeugt wird, umfasst.

7. Verfahren nach Anspruch 6, wobei das Teilen von Licht zum Erzeugen des ersten kohärenten Lichtstrahls (206) und des zweiten kohärenten Lichtstrahls (210) das Teilen von Licht, das durch die Lichtquelle (217) erzeugt wird, gemäß einem ersten beziehungsweise einem zweiten Polarisationszustand umfasst, vorzugsweise wobei der erste Anteil und der zweite Anteil des zweiten Referenzsignals das Teilen des dritten kohärenten Lichtstrahls (220) gemäß einem dritten beziehungsweise einem vierten Polarisationszustand umfasst, wobei vorzugsweise der erste und der zweite Polarisationszustand dem dritten beziehungsweise dem vierten Polarisationszustand entsprechen.

8. Verfahren nach einem der vorstehenden Ansprüche, wobei das Erzeugen des ersten Referenzsignals und des Messsignals das Leiten des ersten (206) und des zweiten (210) kohärenten Lichtstrahls teilweise entlang eines zusammenfallenden optischen Pfads umfasst.

9. Verfahren nach einem der vorstehenden Ansprüche, wobei eine optische Anordnung (202), die zum Leiten des ersten kohärenten Lichtstrahls (206) zu und von einem Referenzreflektor (207) und zum Leiten des zweiten kohärenten Lichtstrahls (210) zu und von dem Zielreflektor (211) konfiguriert ist, zum Erzeugen des ersten Referenzsignals beziehungsweise des Messsignals verwendet wird, vorzugsweise wobei die gemeinsame Verzögerung (229) außerhalb der optischen Anordnung (202) bereitgestellt ist, vorzugsweise wobei die optische Anordnung (202) einen polarisierenden Strahlteiler (205), einen Retroreflektor (215), den Zielreflektor (211), den Referenzreflektor (207), eine erste Viertelwellenplatte (213) und eine zweite Viertelwellenplatte (214) umfasst, wobei die optische Anordnung (202) derart konfiguriert ist, dass eine erste Seite (208) des polarisierenden Strahlteilers (205) den ersten (206) und den zweiten (210) kohärenten Lichtstrahl empfängt, und wobei eine zweite Seite (209), eine dritte Seite (212) und eine vierte Seite (216) des polarisierenden Strahlteilers (205) dem Referenzreflektor (207), dem Zielreflektor (211) beziehungsweise dem Retroreflektor (215) zugewandt sind, und wobei die erste (213) und die zweite (214) Viertelwellenplatte zwischen dem polarisierenden Strahlteiler (205) und dem Referenzreflektor (207) beziehungsweise zwischen dem polarisierenden Strahlteiler (205) und dem Zielreflektor (211) eingeschoben sind, vorzugsweise wobei der Zielreflektor (211) einen Zielspiegel umfasst und wobei der Referenzreflektor (207) einen Referenzspiegel umfasst.

10. Vorrichtung zum Bestimmen, durch optische Interferometrie, einer Position eines Zielreflektors (211) entlang eines Messbereichs (B), umfassend
ein Lichterzeugungsmittel, umfassend eine Lichtquelle (217), die konfiguriert ist, um zwischen einem ersten Zustand und einem zweiten Zustand moduliert zu werden, wobei das Lichterzeugungsmittel in dem ersten Zustand zum Erzeugen von Licht mit einer ersten einzelnen Wellenlänge konfiguriert ist und das Lichterzeugungsmittel in dem zweiten Zustand zum Erzeugen von Licht mit einer zweiten einzelnen Wellenlänge, die sich von der ersten einzelnen Wellenlänge unterscheidet, konfiguriert ist,
ein optisches Mittel stromabwärts des Lichterzeugungsmittels, das zum Erzeugen eines ersten kohärenten Referenzsignals, eines kohärenten Messsignals und eines zweiten kohärenten Referenzsignals konfiguriert ist, das optische Mittel umfassend
einen ersten optischen Pfad (231), der zum Erzeugen des ersten kohärenten Referenzsignals durch Leiten von Licht, das durch die Lichtquelle (217) erzeugt wird, konfiguriert ist, wobei der erste optische Pfad eine Länge des ersten optischen Pfads aufweist,
einen zweiten optischen Pfad (232), umfassend einen bewegbaren Zielreflektor (211) und der zum Erzeugen des kohärenten Messsignals durch Leiten von Licht, das durch die Lichtquelle (217) erzeugt wird, konfiguriert ist, wobei der zweite optische Pfad eine Länge des zweiten optischen Pfads aufweist,
einen dritten optischen Pfad (233), der zum Erzeugen des zweiten kohärenten Referenzsignals durch Leiten von Licht, das durch die Lichtquelle (217) erzeugt wird, konfiguriert ist, wobei der dritte optische Pfad (233) eine Länge des dritten optischen Pfads, die sich von der Länge des ersten optischen Pfads und der Länge des zweiten optischen Pfads unterscheidet, aufweist,
wobei das optische Mittel ferner einen Verzögerungspfad, der eine gemeinsame Verzögerung (229) zwischen dem Erzeugen des zweiten kohärenten Referenzsignals und dem Erzeugen des ersten kohärenten Referenzsignals und zwischen dem Erzeugen des zweiten kohärenten Referenzsignals und dem Erzeugen des kohärenten Messsignals bereitstellt, umfasst,
ein Detektionsmittel (230) stromabwärts des optischen Mittels, das zum Erzeugen eines ersten Interferenzsignals zwischen dem ersten kohärenten Referenzsignal und einem ersten Anteil des zweiten kohärenten Referenzsignals und zum Erzeugen eines zweiten Interferenzsignals zwischen dem kohärenten Messsignal und einem zweiten Anteil des zweiten kohärenten Referenzsignals konfiguriert ist, und umfassend einen ersten Detektor (225), der zum Detektieren des ersten Interferenzsignals und Bestimmen einer ersten Amplitude des ersten Interferenzsignals konfiguriert ist, und einen zweiten Detektor (223), der zum Detektieren des zweiten Interferenzsignals und Bestimmen einer zweiten Amplitude des zweiten Interferenzsignals konfiguriert ist, und zum Erzeugen eines ersten Signals basierend auf dem ersten Interferenzsignal und der ersten Amplitude, und zum Erzeugen eines zweiten Signals basierend auf dem zweiten Interferenzsignal und der zweiten Amplitude konfiguriert ist, und
ein Verarbeitungsmittel, das zum Bestimmen einer Position des Zielreflektors (211) durch Berechnen einer Differenz zwischen der Länge des ersten optischen Pfads und der Länge des zweiten optischen Pfads basierend auf dem ersten und dem zweiten Signal sowohl in dem ersten als auch dem zweiten Zustand konfiguriert ist, vorzugsweise wobei die Vorrichtung konfiguriert ist, um die erste und die zweite Amplitude basierend auf einem von dem Detektieren von Nulldurchgängen des ersten und des zweiten Interferenzsignals und dem Anpassen einer ersten und einer zweiten Funktion an das erste beziehungsweise das zweite Interferenzsignal zu bestimmen, vorzugsweise ferner umfassend ein Einstellmittel (236), das konfiguriert ist, um einen Unterschied der Länge des optischen Pfads der gemeinsamen Verzögerung mit einer Amplitude, die mindestens der Hälfte von einer der ersten Wellenlänge, der zweiten Wellenlänge und einem Nennwert der ersten und der zweiten Wellenlänge entspricht, zu modulieren, wobei die Amplitude optional mindestens die Hälfte der größeren der ersten und der zweiten Wellenlänge beträgt, wobei das Einstellmittel (236) optional konfiguriert ist, um die gemeinsame Verzögerung mit einer Oszillationsfrequenz von weniger als 10 Hz, optional höchstens 1 Hz, einzustellen, und wobei das Einstellmittel (236) optional eines von einem Heizelement, einem Betätigungsglied und einer elektromagnetischen Spule umfasst, vorzugsweise wobei das Verarbeitungsmittel konfiguriert ist, um die Position durch Bestimmen eines ersten und eines zweiten Satzes von Quadratursignalen durch Demodulieren des ersten beziehungsweise des zweiten Interferenzsignals zu bestimmen, und wobei die gemeinsame Verzögerung (229) eine optische Länge aufweist, die derart konfiguriert ist, dass eine Amplitude jedes Quadratursignals des ersten und des zweiten Satzes von Quadratursignalen keinen Nulldurchgang über den Messbereich (B) vorweist, vorzugsweise wobei das optische Mittel ferner einen Lichtleiter umfasst, der als der Verzögerungspfad, der die gemeinsame Verzögerung (229) bereitstellt, konfiguriert ist, vorzugsweise wobei das optische Mittel einen ersten gemeinsamen optischen Pfad (234) umfasst, wobei sich der erste, der zweite und der dritte optische Pfad überlappen, wobei der erste gemeinsame optische Pfad ein erstes Ende, umfassend einen optischen Aufnehmer, der mit dem Lichterzeugungsmittel optisch verbunden ist, und ein zweites Ende stromabwärts von dem ersten Ende, umfassend einen ersten Strahlteiler (228), umfasst, wobei der erste Strahlteiler (228) zum Abteilen des dritten optischen Pfads (233) konfiguriert ist, wobei ein Teil des dritten optischen Pfads (233), der optional stromabwärts von dem ersten gemeinsamen optischen Pfad bereitgestellt ist, einen Lichtleiter umfasst, der als der Verzögerungspfad, der die gemeinsame Verzögerung (229) bereitstellt, konfiguriert ist, und wobei das optische Mittel optional einen zweiten gemeinsamen optischen Pfad (235), wobei sich der erste (206) und der zweite (210) optische Pfad entlang des zweiten gemeinsamen optischen Pfads überlappen, und einen zweiten Strahlteiler umfasst, wobei der zweite gemeinsame optische Pfad (235) ein erstes Ende, das mit dem ersten Strahlteiler (228) optisch verbunden ist, und ein zweites Ende stromabwärts von dem ersten Ende, das mit dem zweiten Strahlteiler optisch verbunden ist, umfasst, wobei der zweite Strahlteiler zum Abteilen des zweiten optischen Pfads (206) konfiguriert ist, wobei der zweite gemeinsame optische Pfad (206) optional einen weiteren Lichtleiter umfasst, und wobei der zweite Strahlteiler optional einen ersten polarisierenden Strahlteiler umfasst, vorzugsweise wobei das optische Mittel eine optische Anordnung (202), umfassend einen polarisierenden Strahlteiler (205), einen Retroreflektor (215), den Zielreflektor (211), einen Referenzreflektor (207), eine erste Viertelwellenplatte (213) und eine zweite Viertelwellenplatte (214), umfasst, wobei die optische Anordnung (202) derart konfiguriert ist, dass eine erste Seite (208) des polarisierenden Strahlteilers (205) den ersten (206) und den zweiten (210) kohärenten Lichtstrahl empfängt, und wobei eine zweite Seite (209), eine dritte Seite (212) und eine vierte Seite (216) des polarisierenden Strahlteilers (205) dem Referenzreflektor (207), dem Zielreflektor (211) beziehungsweise dem Retroreflektor (215) zugewandt sind, und wobei die erste (213) und die zweite (214) Viertelwellenplatte zwischen dem polarisierenden Strahlteiler (205) und dem Referenzreflektor (207) beziehungsweise zwischen dem polarisierenden Strahlteiler (205) und dem Zielreflektor (211) eingeschoben sind, wobei der Zielreflektor optional einen Zielspiegel umfasst und wobei der Referenzreflektor einen Referenzspiegel umfasst, vorzugsweise wobei das Detektionsmittel einen vierten Strahlteiler (219) stromabwärts des optischen Mittels, das zum Erzeugen des ersten Interferenzsignals und des zweiten Interferenzsignals konfiguriert ist, umfasst, wobei der vierte Strahlteiler optional einen zweiten polarisierenden Strahlteiler umfasst, vorzugsweise wobei das Lichterzeugungsmittel eine einzelne Lichtquelle zum Erzeugen von Licht in dem ersten und dem zweiten Zustand umfasst, wobei die Lichtquelle optional einen Laser umfasst, vorzugsweise wobei das Detektionsmittel einen ersten Polarisator (227) stromaufwärts des ersten Detektors (225), der zum Erzeugen des ersten Interferenzsignals konfiguriert ist, und einen zweiten Polarisator (226) stromaufwärts des zweiten Detektors (223), der zum Erzeugen des zweiten Interferenzsignals konfiguriert ist, umfasst.

11. Vorrichtung nach Anspruch 10, wobei das optische Mittel eine optische Anordnung (202), umfassend einen polarisierenden Strahlteiler (205), einen Retroreflektor (215), den Zielreflektor (211), einen Referenzreflektor (207), eine erste Viertelwellenplatte (213) und eine zweite Viertelwellenplatte (214), umfasst, wobei die optische Anordnung (202) derart konfiguriert ist, dass eine erste Seite (208) des polarisierenden Strahlteilers (205) den ersten (206) und den zweiten (210) kohärenten Lichtstrahl empfängt, und wobei eine zweite Seite (209), eine dritte Seite (212) und eine vierte Seite (216) des polarisierenden Strahlteilers (205) dem Referenzreflektor (207), dem Zielreflektor (211) beziehungsweise dem Retroreflektor (215) zugewandt sind, und wobei die erste (213) und die zweite (214) Viertelwellenplatte zwischen dem polarisierenden Strahlteiler (205) und dem Referenzreflektor (207) beziehungsweise zwischen dem polarisierenden Strahlteiler (205) und dem Zielreflektor (211) eingeschoben sind, wobei das optische Mittel einen zweiten gemeinsamen optischen Pfad (235), wobei sich der erste (206) und der zweite (210) optische Pfad entlang des zweiten gemeinsamen optischen Pfads überlappen, und einen zweiten Strahlteiler umfasst, wobei der zweite gemeinsame optische Pfad (235) ein erstes Ende, das mit dem ersten Strahlteiler (228) optisch verbunden ist, und ein zweites Ende stromabwärts von dem ersten Ende, das mit dem zweiten Strahlteiler optisch verbunden ist, umfasst, wobei der zweite Strahlteiler zum Abteilen des zweiten optischen Pfads (206) konfiguriert ist, wobei der zweite Strahlteiler innerhalb der optischen Anordnung eingerichtet ist und einen Teil der optischen Anordnung ausbildet, vorzugsweise wobei der erste polarisierende Strahlteiler den polarisierenden Strahlteiler (205) ausbildet.

12. Vorrichtung nach Anspruch 10, wobei das optische Mittel eine optische Anordnung (202), umfassend einen polarisierenden Strahlteiler (205), einen Retroreflektor (215), den Zielreflektor (211), einen Referenzreflektor (207), eine erste Viertelwellenplatte (213) und eine zweite Viertelwellenplatte (214), umfasst, wobei die optische Anordnung (202) derart konfiguriert ist, dass eine erste Seite (208) des polarisierenden Strahlteilers (205) den ersten (206) und den zweiten (210) kohärenten Lichtstrahl empfängt, und wobei eine zweite Seite (209), eine dritte Seite (212) und eine vierte Seite (216) des polarisierenden Strahlteilers (205) dem Referenzreflektor (207), dem Zielreflektor (211) beziehungsweise dem Retroreflektor (215) zugewandt sind, und wobei die erste (213) und die zweite (214) Viertelwellenplatte zwischen dem polarisierenden Strahlteiler (205) und dem Referenzreflektor (207) beziehungsweise zwischen dem polarisierenden Strahlteiler (205) und dem Zielreflektor (211) eingeschoben sind, wobei das optische Mittel einen zweiten gemeinsamen optischen Pfad (235), wobei sich der erste (206) und der zweite (210) optische Pfad entlang des zweiten gemeinsamen optischen Pfads überlappen, und einen zweiten Strahlteiler umfasst, wobei der zweite gemeinsame optische Pfad (235) ein erstes Ende, das mit dem ersten Strahlteiler (228) optisch verbunden ist, und ein zweites Ende stromabwärts von dem ersten Ende, das mit dem zweiten Strahlteiler optisch verbunden ist, umfasst, wobei der zweite Strahlteiler zum Abteilen des zweiten optischen Pfads (206) konfiguriert ist, wobei der zweite Strahlteiler stromaufwärts der optischen Anordnung eingerichtet ist und derart konfiguriert ist, dass der erste und der zweite optische Pfad die optische Anordnung nicht überlappend durchqueren.

13. Vorrichtung nach einem der Ansprüche 10 bis 12, wobei das optische Mittel einen dritten Strahlteiler umfasst, der zum Erzeugen des ersten Anteils und des zweiten Anteils des zweiten kohärenten Referenzsignals konfiguriert ist.

14. Vorrichtung nach Anspruch 10, wobei das optische Mittel eine optische Anordnung (202), umfassend einen polarisierenden Strahlteiler (205), einen Retroreflektor (215), den Zielreflektor (211), einen Referenzreflektor (207), eine erste Viertelwellenplatte (213) und eine zweite Viertelwellenplatte (214), umfasst, wobei die optische Anordnung (202) derart konfiguriert ist, dass eine erste Seite (208) des polarisierenden Strahlteilers (205) den ersten (206) und den zweiten (210) kohärenten Lichtstrahl empfängt, und wobei eine zweite Seite (209), eine dritte Seite (212) und eine vierte Seite (216) des polarisierenden Strahlteilers (205) dem Referenzreflektor (207), dem Zielreflektor (211) beziehungsweise dem Retroreflektor (215) zugewandt sind, und wobei die erste (213) und die zweite (214) Viertelwellenplatte zwischen dem polarisierenden Strahlteiler (205) und dem Referenzreflektor (207) beziehungsweise zwischen dem polarisierenden Strahlteiler (205) und dem Zielreflektor (211) eingeschoben sind, wobei das optische Mittel einen zweiten gemeinsamen optischen Pfad (235), wobei sich der erste (206) und der zweite (210) optische Pfad entlang des zweiten gemeinsamen optischen Pfads überlappen, und einen zweiten Strahlteiler umfasst, wobei der zweite gemeinsame optische Pfad (235) ein erstes Ende, das mit dem ersten Strahlteiler (228) optisch verbunden ist, und ein zweites Ende stromabwärts von dem ersten Ende, das mit dem zweiten Strahlteiler optisch verbunden ist, umfasst, wobei der zweite Strahlteiler zum Abteilen des zweiten optischen Pfads (206) konfiguriert ist, wobei der zweite Strahlteiler stromaufwärts der optischen Anordnung eingerichtet ist und derart konfiguriert ist, dass der erste und der zweite optische Pfad die optische Anordnung nicht überlappend durchqueren, wobei das optische Mittel einen dritten Strahlteiler, der zum Erzeugen des ersten Anteils und des zweiten Anteils des zweiten kohärenten Referenzsignals konfiguriert ist, umfasst, wobei der dritte Strahlteiler einen dritten polarisierenden Strahlteiler umfasst, wobei vorzugsweise der zweite Strahlteiler und der dritte Strahlteiler ein einzelnes Strahlteilungsmittel ausbilden.

15. Vorrichtung nach einem der Ansprüche 10 bis 14, umfassend ein weiteres optisches Mittel und ein weiteres Detektionsmittel, wobei das weitere optische Mittel und das weitere Detektionsmittel zum Messen der Position des Ziels entlang einer von dem optischen Mittel und dem Detektionsmittel unterschiedlichen Richtung konfiguriert sind, vorzugsweise umfassend einen zusätzlichen Strahlteiler, der zum Aufteilen des Lichts, das durch das Lichterzeugungsmittel erzeugt wird, zwischen dem optischen Mittel und dem weiteren optischen Mittel eingerichtet ist, wobei der zusätzliche Strahlteiler zwischen dem Lichterzeugungsmittel und sowohl dem optischen Mittel als auch dem weiteren optischen Mittel bereitgestellt ist.

## Revendications

1. Procédé permettant de déterminer une position par interférométrie optique d'un réflecteur cible le long d'une plage de mesure (B) comprenant les étapes consistant à :
• générer par modulation un premier, un deuxième et un troisième faisceau de lumière cohérente à une première longueur d'onde unique à une première instance de temps et à une seconde longueur d'onde unique différente de la première longueur d'onde unique à une seconde instance de temps,
• générer un premier signal de référence en guidant le premier faisceau de lumière cohérente (206) le long d'un premier trajet optique (231), dans lequel le premier trajet optique a une longueur de premier trajet optique,
• générer un signal de mesure en guidant le deuxième faisceau de lumière cohérente (210) le long d'un deuxième trajet optique (232) comprenant le réflecteur cible (211), dans lequel le deuxième trajet optique a une longueur de deuxième trajet optique,
• générer un second signal de référence en guidant le troisième faisceau de lumière cohérente (220) le long d'un troisième trajet optique (233), dans lequel le troisième trajet optique (233) a une longueur de troisième trajet optique différente de la longueur de premier trajet optique et de la longueur de deuxième trajet optique,
• fournir un retard commun (229) entre la génération du second signal de référence et la génération du premier signal de référence et entre la génération du second signal de référence et la génération du signal de mesure,
• générer un premier signal d'interférence à partir du premier signal de référence et d'une première portion du second signal de référence à la première instance de temps et à la seconde instance de temps,
• générer un second signal d'interférence à partir du signal de mesure et d'une seconde portion du second signal de référence à la première instance de temps et à la seconde instance de temps,
• déterminer une première amplitude du premier signal d'interférence et une seconde amplitude du second signal d'interférence,
• générer un premier signal en fonction du premier signal d'interférence et de la première amplitude,
• générer un second signal en fonction du second signal d'interférence et de la seconde amplitude, et
• déterminer une position du réflecteur cible (211) en calculant une différence entre la longueur de premier trajet optique et la longueur de deuxième trajet optique en fonction du premier et du second signal à la fois dans la première et la seconde instance de temps.

2. Procédé selon la revendication 1, dans lequel les première et seconde amplitudes sont déterminées par l'un parmi la détection de passages par le point zéro des premier et second signaux d'interférence, et l'ajustement de première et seconde fonctions aux premier et second signaux d'interférence, respectivement.

3. Procédé selon la revendication 1 ou 2, dans lequel le retard commun correspond à une différence de longueur de trajectoire optique et dans lequel la différence de longueur de trajectoire optique est modulée avec une amplitude correspondant à au moins la moitié de l'une de la première longueur d'onde, de la seconde longueur d'onde et d'une valeur nominale des première et seconde longueurs d'onde, de préférence une amplitude d'au moins la moitié de la plus grande des première et seconde longueurs d'onde, de préférence dans lequel la différence de longueur de trajectoire optique oscille avec une fréquence d'oscillation inférieure à 10 Hz, de préférence au plus 1 Hz.

4. Procédé selon la revendication 3, dans lequel la différence de longueur de trajectoire optique est modulée en changeant au moins l'un parmi une longueur et un indice de réfraction, de préférence dans lequel la différence de longueur de trajectoire optique est modulée par une exposition à au moins l'un parmi de la chaleur, une contrainte de cisaillement et un champ magnétique.

5. Procédé selon l'une quelconque des revendications précédentes, dans lequel la position est déterminée en déterminant un premier et un second ensemble de signaux en quadrature par démodulation des premier et second signaux d'interférence, respectivement, et dans lequel le retard commun (229) a une longueur optique configurée de telle sorte qu'une amplitude de chaque signal en quadrature des premier et second ensembles de signaux en quadrature ne présente pas de passage par le point zéro sur la plage de mesure (B).

6. Procédé selon l'une quelconque des revendications précédentes, dans lequel la génération du premier faisceau de lumière cohérente (206) et du deuxième faisceau de lumière cohérente (210) comprend la division de lumière générée par une source de lumière (217), de préférence dans lequel la génération du troisième faisceau de lumière cohérente (220) comprend la division de lumière générée par la source de lumière (217).

7. Procédé selon la revendication 6, dans lequel la division de lumière permettant de générer le premier faisceau de lumière cohérente (206) et le deuxième faisceau de lumière cohérente (210) comprend la division de lumière générée par la source de lumière (217) selon un premier et un deuxième état de polarisation, respectivement, de préférence dans lequel la première portion et la seconde portion du second signal de référence comprend la division du troisième faisceau de lumière cohérente (220) selon un troisième et un quatrième état de polarisation, respectivement, de préférence le premier et le deuxième état de polarisation correspondent au troisième et au quatrième état de polarisation respectivement.

8. Procédé selon l'une quelconque des revendications précédentes, dans lequel la génération du premier signal de référence et du signal de mesure comprend le guidage du premier (206) et du deuxième (210) faisceau de lumière cohérente en partie le long d'un trajet optique coïncident.

9. Procédé selon l'une quelconque des revendications précédentes, dans lequel un ensemble optique (202) configuré pour guider le premier faisceau de lumière cohérente (206) vers et à partir d'un réflecteur de référence (207) et pour guider le deuxième faisceau de lumière cohérente (210) vers et à partir du réflecteur de référence (211) est utilisé pour la génération du premier signal de référence et du signal de mesure, respectivement, de préférence dans lequel le retard commun (229) est fourni à l'extérieur de l'ensemble optique (202), de préférence dans lequel l'ensemble optique (202) comprend un diviseur de faisceau à polarisation (205), un rétroréflecteur (215), le réflecteur cible (211), le réflecteur de référence (207), une première plaque quart d'onde (213) et une seconde plaque quart d'onde (214), dans lequel l'ensemble optique (202) est configuré de telle sorte qu'un premier côté (208) du diviseur de faisceau à polarisation (205) reçoit le premier (206) et le deuxième (210) faisceau de lumière cohérente, et dans lequel un deuxième côté (209), un troisième côté (212) et un quatrième côté (216) du diviseur de faisceau à polarisation (205) font face vers le réflecteur de référence (207), le réflecteur cible (211) et le rétroréflecteur (215), respectivement, et dans lequel la première (213) et la seconde (214) plaque quart d'onde sont interposées entre le diviseur de faisceau à polarisation (205) et le réflecteur de référence (207) et entre le diviseur de faisceau à polarisation (205) et le réflecteur cible (211), respectivement, de préférence dans lequel le réflecteur cible (211) comprend un miroir cible et dans lequel le réflecteur de référence (207) comprend un miroir de référence.

10. Dispositif permettant de déterminer par interférométrie optique une position d'un réflecteur cible (211) le long d'une plage de mesure (B) comprenant,
un moyen de génération de lumière comprenant une source de lumière (217) configurée pour être modulée entre un premier état et un second état, dans lequel dans le premier état le moyen de génération de lumière est configuré pour générer de la lumière à une première longueur d'onde unique et dans le second état le moyen de génération de lumière est configuré pour générer de la lumière à une seconde longueur d'onde unique différente de la première longueur d'onde unique,
un moyen optique en aval du moyen de génération de lumière configuré pour générer un premier signal de référence cohérent, un signal de mesure cohérent et un second signal de référence cohérent, le moyen optique comprenant
un premier trajet optique (231) configuré pour générer le premier signal de référence cohérent en guidant de la lumière générée par la source de lumière (217), dans lequel le premier trajet optique a une longueur de premier trajet optique,
un deuxième trajet optique (232) comprenant un réflecteur cible mobile (211) et configuré pour générer le signal de mesure cohérent en guidant de la lumière générée par la source de lumière (217), dans lequel le deuxième trajet optique a une longueur de deuxième trajet optique,
un troisième trajet optique (233) configuré pour générer le second signal de référence cohérent en guidant de la lumière générée par la source de lumière (217), dans lequel le troisième trajet optique (233) a une longueur de troisième trajet optique différente de la longueur de premier trajet optique et de la longueur de deuxième trajet optique,
dans lequel le moyen optique comprend en outre un trajet de retard fournissant un retard commun (229) entre la génération du second signal de référence cohérent et la génération du premier signal de référence cohérent et entre la génération du second signal de référence cohérent et la génération du signal de mesure cohérent,
un moyen de détection (230) en aval du moyen optique configuré pour générer un premier signal d'interférence entre le premier signal de référence cohérent et une première portion du second signal de référence cohérent et pour générer un second signal d'interférence entre le signal de mesure cohérent et une seconde portion du second signal de référence cohérent, et comprenant un premier détecteur (225), configuré pour la détection du premier signal d'interférence et la détermination d'une première amplitude du premier signal d'interférence, et un second détecteur (223), configuré pour la détection du second signal d'interférence et la détermination d'une seconde amplitude du second signal d'interférence, et configuré pour générer un premier signal en fonction du premier signal d'interférence et de la première amplitude, et pour générer un second signal en fonction du second signal d'interférence et de la seconde amplitude, et
un moyen de traitement configuré pour la détermination d'une position du réflecteur cible (211) en calculant une différence entre la longueur de premier trajet optique et la longueur de deuxième trajet optique en fonction du premier et du second signal à la fois dans le premier et le second état, de préférence dans lequel le dispositif est configuré pour déterminer les première et seconde amplitudes en fonction de l'un parmi la détection de passages par le point zéro des premier et second signaux d'interférence et l'ajustement d'une première et d'une seconde fonction aux premier et second signaux d'interférence, respectivement, de préférence comprenant en outre un moyen d'adaptation (236) configuré pour moduler une différence de longueur de trajectoire optique du retard commun avec une amplitude correspondant à au moins la moitié de l'une de la première longueur d'onde, de la seconde longueur d'onde et d'une valeur nominale des première et seconde longueurs d'onde, dans lequel l'amplitude est facultativement au moins la moitié de la plus grande des première et seconde longueurs d'onde, dans lequel le moyen d'adaptation (236) est configuré facultativement pour adapter le retard commun avec une fréquence d'oscillation inférieure à 10 Hz, facultativement d'au plus 1 Hz, et dans lequel le moyen d'adaptation (236) comprend facultativement l'un parmi un élément chauffant, un actionneur et une bobine électromagnétique, de préférence dans lequel le moyen de traitement est configuré pour déterminer la position en déterminant un premier et un second ensemble de signaux en quadrature par démodulation des premier et second signaux d'interférence, respectivement, et dans lequel le retard commun (229) a une longueur optique configurée de telle sorte qu'une amplitude de chaque signal en quadrature du premier et du second ensemble de signaux en quadrature ne présente pas de passage par le point zéro sur la plage de mesure (B), de préférence dans lequel le moyen optique comprend en outre un guide de lumière configuré en tant que trajet de retard fournissant le retard commun (229), de préférence dans lequel le moyen optique comprend un premier trajet optique conjoint (234) dans lequel le premier, le deuxième et le troisième trajet optique se chevauchent, dans lequel le premier trajet optique conjoint comprend une première extrémité comprenant un capteur optique connecté optiquement au moyen de génération de lumière et une seconde extrémité en aval de la première extrémité comprenant un premier diviseur de faisceau (228), dans lequel le premier diviseur de faisceau (228) est conçu pour scinder le troisième trajet optique (233), dans lequel une partie du troisième trajet optique (233) facultativement fournie en aval du premier trajet optique conjoint comprend un guide de lumière configuré en tant que trajet de retard fournissant le retard commun (229), et dans lequel le moyen optique comprend facultativement un deuxième trajet optique conjoint (235), dans lequel le premier (206) et le deuxième (210) trajet optique se chevauchent le long du deuxième trajet optique conjoint, et un deuxième diviseur de faisceau, dans lequel le deuxième trajet optique conjoint (235) comprend une première extrémité connectée optiquement au premier diviseur de faisceau (228) et une seconde extrémité en aval de la première extrémité connectée optiquement au deuxième diviseur de faisceau, dans lequel le deuxième diviseur de faisceau est configuré pour scinder le deuxième trajet optique (206), dans lequel le deuxième trajet optique conjoint (206) comprend facultativement un guide de lumière supplémentaire, et dans lequel le deuxième diviseur de faisceau comprend facultativement un premier diviseur de faisceau à polarisation, de préférence dans lequel le moyen optique comprend un ensemble optique (202) comprenant un diviseur de faisceau à polarisation (205), un rétroréflecteur (215), le réflecteur cible (211), un réflecteur de référence (207), une première plaque quart d'onde (213) et une seconde plaque quart d'onde (214), dans lequel l'ensemble optique (202) est configuré de telle sorte qu'un premier côté (208) du diviseur de faisceau à polarisation (205) reçoit le premier (206) et le deuxième (210) faisceau de lumière cohérente, et dans lequel un deuxième côté (209), un troisième côté (212) et un quatrième côté (216) du diviseur de faisceau à polarisation (205) font face vers le réflecteur de référence (207), le réflecteur cible (211) et le rétroréflecteur (215), respectivement, et dans lequel la première (213) et la seconde (214) plaque quart d'onde sont interposées entre le diviseur de faisceau à polarisation (205) et le réflecteur de référence (207) et entre le diviseur de faisceau à polarisation (205) et le réflecteur cible (211), respectivement, dans lequel le réflecteur cible comprend facultativement un miroir cible et dans lequel le réflecteur de référence comprend un miroir de référence, de préférence dans lequel le moyen de détection comprend un quatrième diviseur de faisceau (219) en aval du moyen optique configuré pour générer le premier signal d'interférence et le second signal d'interférence, dans lequel le quatrième diviseur de faisceau comprend facultativement un deuxième diviseur de faisceau à polarisation, de préférence dans lequel le moyen de génération de lumière comprend une source de lumière unique permettant de générer de la lumière dans le premier et le second état, dans lequel la source de lumière comprend facultativement un laser, de préférence dans lequel le moyen de détection comprend un premier polariseur (227) en amont du premier détecteur (225) configuré pour générer le premier signal d'interférence et un second polariseur (226) en amont du second détecteur (223) configuré pour générer le second signal d'interférence.

11. Dispositif selon la revendication 10, dans lequel le moyen optique comprend un ensemble optique (202) comprenant un diviseur de faisceau à polarisation (205), un rétroréflecteur (215), le réflecteur cible (211), un réflecteur de référence (207), une première plaque quart d'onde (213) et une seconde plaque quart d'onde (214), dans lequel l'ensemble optique (202) est configuré de telle sorte qu'un premier côté (208) du diviseur de faisceau à polarisation (205) reçoit le premier (206) et le deuxième (210) faisceau de lumière cohérente, et dans lequel un deuxième côté (209), un troisième côté (212) et un quatrième côté (216) du diviseur de faisceau à polarisation (205) font face vers le réflecteur de référence (207), le réflecteur cible (211) et le rétroréflecteur (215), respectivement, et dans lequel la première (213) et la seconde (214) plaque quart d'onde sont interposées entre le diviseur de faisceau à polarisation (205) et le réflecteur de référence (207) et entre le diviseur de faisceau à polarisation (205) et le réflecteur cible (211), respectivement, dans lequel le moyen optique comprend un deuxième trajet optique conjoint (235), dans lequel le premier (206) et le deuxième (210) trajet optique se chevauchent le long du deuxième trajet optique conjoint, et un deuxième diviseur de faisceau, dans lequel le deuxième trajet optique conjoint (235) comprend une première extrémité connectée optiquement au premier diviseur de faisceau (228) et une seconde extrémité en aval de la première extrémité connectée optiquement au deuxième diviseur de faisceau, dans lequel le deuxième diviseur de faisceau est configuré pour scinder le deuxième trajet optique (206), dans lequel le deuxième diviseur de faisceau est agencé au sein de l'ensemble optique et fait partie de l'ensemble optique, de préférence dans lequel le premier diviseur de faisceau à polarisation forme le diviseur de faisceau à polarisation (205).

12. Dispositif selon la revendication 10, dans lequel le moyen optique comprend un ensemble optique (202) comprenant un diviseur de faisceau à polarisation (205), un rétroréflecteur (215), le réflecteur cible (211), un réflecteur de référence (207), une première plaque quart d'onde (213) et une seconde plaque quart d'onde (214), dans lequel l'ensemble optique (202) est configuré de telle sorte qu'un premier côté (208) du diviseur de faisceau à polarisation (205) reçoit le premier (206) et le deuxième (210) faisceau de lumière cohérente, et dans lequel un deuxième côté (209), un troisième côté (212) et un quatrième côté (216) du diviseur de faisceau à polarisation (205) font face vers le réflecteur de référence (207), le réflecteur cible (211) et le rétroréflecteur (215), respectivement, et dans lequel la première (213) et la seconde (214) plaque quart d'onde sont interposées entre le diviseur de faisceau à polarisation (205) et le réflecteur de référence (207) et entre le diviseur de faisceau à polarisation (205) et le réflecteur cible (211), respectivement, dans lequel le moyen optique comprend un deuxième trajet optique conjoint (235), dans lequel le premier (206) et le deuxième (210) trajet optique se chevauchent le long du deuxième trajet optique conjoint, et un deuxième diviseur de faisceau, dans lequel le deuxième trajet optique conjoint (235) comprend une première extrémité connectée optiquement au premier diviseur de faisceau (228) et une seconde extrémité en aval de la première extrémité connectée optiquement au deuxième diviseur de faisceau, dans lequel le deuxième diviseur de faisceau est configuré pour scinder le deuxième trajet optique (206), dans lequel le deuxième diviseur de faisceau est agencé en amont de l'ensemble optique et est configuré de telle sorte que le premier et le deuxième trajet optique traversent sans chevauchement l'ensemble optique.

13. Dispositif selon l'une quelconque des revendications 10 à 12, dans lequel le moyen optique comprend un troisième diviseur de faisceau configuré pour générer la première portion et la seconde portion du second signal de référence cohérent.

14. Dispositif selon la revendication 10, dans lequel le moyen optique comprend un ensemble optique (202) comprenant un diviseur de faisceau à polarisation (205), un rétroréflecteur (215), le réflecteur cible (211), un réflecteur de référence (207), une première plaque quart d'onde (213) et une seconde plaque quart d'onde (214), dans lequel l'ensemble optique (202) est configuré de telle sorte qu'un premier côté (208) du diviseur de faisceau à polarisation (205) reçoit le premier (206) et le deuxième (210) faisceau de lumière cohérente, et dans lequel un deuxième côté (209), un troisième côté (212) et un quatrième côté (216) du diviseur de faisceau à polarisation (205) font face vers le réflecteur de référence (207), le réflecteur cible (211) et le rétroréflecteur (215), respectivement, et dans lequel la première (213) et la seconde (214) plaque quart d'onde sont interposées entre le diviseur de faisceau à polarisation (205) et le réflecteur de référence (207) et entre le diviseur de faisceau à polarisation (205) et le réflecteur cible (211), respectivement, dans lequel le moyen optique comprend un deuxième trajet optique conjoint (235), dans lequel le premier (206) et le deuxième (210) trajet optique se chevauchent le long du deuxième trajet optique conjoint, et un deuxième diviseur de faisceau, dans lequel le deuxième trajet optique conjoint (235) comprend une première extrémité connectée optiquement au premier diviseur de faisceau (228) et une seconde extrémité en aval de la première extrémité connectée optiquement au deuxième diviseur de faisceau, dans lequel le deuxième diviseur de faisceau est configuré pour scinder le deuxième trajet optique (206), dans lequel le deuxième diviseur de faisceau est agencé en amont de l'ensemble optique et est configuré de telle sorte que le premier et le deuxième trajet optique traversent sans chevauchement l'ensemble optique, dans lequel le moyen optique comprend un troisième diviseur de faisceau configuré pour générer la première portion et la seconde portion du second signal de référence cohérent, dans lequel le troisième diviseur de faisceau comprend un troisième diviseur de faisceau à polarisation, de préférence le deuxième diviseur de faisceau et le troisième diviseur de faisceau forment un unique moyen de division de faisceau.

15. Dispositif selon l'une quelconque des revendications 10 à 14, comprenant un moyen optique supplémentaire et un moyen de détection supplémentaire, dans lequel le moyen optique supplémentaire et le moyen de détection supplémentaire sont configurés pour mesurer la position de la cible le long d'une direction différente de celle du moyen optique et du moyen de détection, comprenant de préférence un diviseur de faisceau additionnel agencé pour partager de la lumière générée par le moyen de génération de lumière entre le moyen optique et le moyen optique supplémentaire, dans lequel le diviseur de faisceau additionnel est fourni entre le moyen de génération de lumière et à la fois le moyen optique et le moyen optique supplémentaire.
